(19) Europäisches Patentamt
European Patent Office
Office européen des brevets

(11) **EP 2 465 317 B1**

(12) **EUROPEAN PATENT SPECIFICATION**

(45) Date of publication and mention of the grant of the patent:
**06.08.2014 Bulletin 2014/32**

(51) Int Cl.:
*H04W 72/00* (2009.01)    *H04W 24/10* (2009.01)
*H04W 72/04* (2009.01)

(21) Application number: **10747356.3**

(22) Date of filing: **13.08.2010**

(86) International application number:
**PCT/US2010/045527**

(87) International publication number:
**WO 2011/020062 (17.02.2011 Gazette 2011/07)**

(54) **FRAME STRUCTURE AND CONTROL SIGNALING FOR DOWNLINK COORDINATED MULTI-POINT (COMP) TRANSMISSION**

RAHMENAUFBAU UND STEUERSIGNALGEBUNG FÜR DOWNLINK-COMP-ÜBERTRAGUNG

STRUCTURE DE TRAME ET SIGNALISATION DE COMMANDE POUR UNE TRANSMISSION MULTIPOINT COORDONNÉE (COMP) DE LIAISON DESCENDANTE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **14.08.2009 US 234253 P**
**14.08.2009 US 234254 P**
**14.08.2009 US 234255 P**

(43) Date of publication of application:
**20.06.2012 Bulletin 2012/25**

(60) Divisional application:
**12158196.1 / 2 464 187**
**14173417.8**

(73) Proprietor: **BlackBerry Limited**
**Waterloo, ON N2K 0A7 (CA)**

(72) Inventors:
• **VRZIC, Sophie**
**Kanata**
**Ontario K2K 3K1 (CA)**
• **BONTU, Chandra S.**
**Kanata**
**Ontario K2K 3K1 (CA)**
• **YU, Dongsheng**
**Kanata**
**Ontario K2K 3K1 (CA)**
• **XU, Hua**
**Kanata**
**Ontario K2K 3K1 (CA)**
• **EARNSHAW, Andrew Mark**
**Kanata**
**Ontario K2K 3K1 (CA)**
• **FONG, Mo-Han**
**Kanata**
**Ontario K2K 3K1 (CA)**
• **CAI, Zhijun**
**Texas 75039 (US)**

(74) Representative: **Hibbert, Juliet Jane Grace et al**
**Kilburn & Strode LLP**
**20 Red Lion Street**
**London WC1R 4PJ (GB)**

(56) References cited:
**EP-A1- 2 086 253    EP-A2- 1 983 702**

• **CATT: "Impact of CoMP on Control Plane", 3GPP DRAFT; R2-093727, 23 June 2009 (2009-06-23), XP050351960, Los Angeles, US**
• **SAMSUNG: ""Design considerations for COMP Joint Transmission"", 3GPP TSG RAN WG1 MEETING 56BIS, R1-091232, 23 March 2009 (2009-03-23), - 25 March 2009 (2009-03-25), XP002608509, Seoul, Korea**
• **S. PARKVALL ET AL: "The Evolution of LTE towards IMT-Advanced", JOURNAL OF COMMUNICATIONS, vol. 4, no. 3, April 2009 (2009-04), pages 146-154, XP002608510,**

- HUAWEI: "Discrimination of MBSFN Subframes Usage", 3 GPP TSG-RAN WG2 MEETING 66BIS R2-093782, 29 June 2009 (2009-06-29), - 3 July 2009 (2009-07-03), XP002639774, Los Angele, USA
- HUAWEI ET AL: "Solutions for DL CoMP Transmission - For Issues on Control Zone, CRS and DRS", 3GPP R1-090821, 9 February 2009 (2009-02-09), pages 1-9, XP002630581, Retrieved from the Internet: URL:http://ftp.3gpp.org/tsg_ran/WG1_RL1/TS GR1_56/Docs/> [retrieved on 2011-03-28]
- ERICSSON: "Downlink CoMP", 3GPP TSG RAN WG1 MEETING 56 R1-090914, 9 February 2009 (2009-02-09), - 13 February 2009 (2009-02-13), XP050318755, Athens, Greece
- ALCATEL-LUCENT SHANGHAI BELL ET AL: "Efficient uplink coordinated multi-point reception with reduced backhauling cost", 3GPP DRAFT; R1-092146, 28 April 2009 (2009-04-28), XP050339589, San Francisco, USA
- HUAWEI: "Inter-eNB and Intra-eNB Schemes for CoMP in LTE-Advanced", 3GPP DRAFT; R1-083050, 12 August 2008 (2008-08-12), XP050316496, Jeju
- JUNGNICKEL V ET AL: "Implementation concepts for distributed cooperative transmission", SIGNALS, SYSTEMS AND COMPUTERS, 2008 42ND ASILOMAR CONFERENCE ON, IEEE, 26 October 2008 (2008-10-26), pages 1035-1039, XP031475445, IEEE, PISCATAWAY, NJ, USA ISBN: 978-1-4244-2940-0

**Description**

BACKGROUND

As used herein, the terms "device," "user equipment," and "UE" might in some cases refer to mobile devices such as mobile telephones, personal digital assistants, handheld or laptop computers, Blackberry® devices, and similar devices that have telecommunications capabilities. Such a UE might consist of a UE and its associated removable memory module, such as but not limited to a Universal Integrated Circuit Card (UICC) that includes a Subscriber Identity Module (SIM) application, a Universal Subscriber Identity Module (USIM) application, or a Removable User Identity Module (R-UIM) application. Alternatively, such a UE might consist of the device itself without such a module. In other cases, the term "UE" might refer to devices that have similar capabilities but that are not transportable, such as desktop computers, set-top boxes, or network appliances. The term "UE" can also refer to any hardware or software component that can terminate a communication session for a user. Also, the terms "user agent," "UA," "user equipment," "UE," "user device" and "user node" might be used synonymously herein.

As telecommunications technology has evolved, more advanced network access equipment has been introduced that can provide services that were not possible previously. This network access equipment might include systems and devices that are improvements of the equivalent equipment in a traditional wireless telecommunications system. Such advanced or next generation equipment may be included in evolving wireless communications standards, such as long-term evolution (LTE) and LTE-Advanced (LTE-A). For example, an LTE or LTE-A system might include an Evolved Universal Terrestrial Radio Access Network (E-UTRAN) or evolved node B (or eNB), a wireless access point, or a similar component rather than a traditional base station. As used herein, the term "access node" refers to any component of the wireless network, such as a traditional base station, a wireless access point, or an LTE or LTE-A node B or eNB, that creates a geographical area of reception and transmission coverage allowing a UE or a relay node to access other components in a telecommunications system. In this document, the term "access node" and "access device" may be used interchangeably, but it is understood that an access node may comprise a plurality of hardware and software.

The term "CoMP" refers to "coordinated multipoint." CoMP transmission may be a form of transmission among multiple access nodes to a single UE. The term "CoMP" may be used in conjunction with other terms to indicate various aspects of CoMP transmission, data, sets, signaling, and/or reception. Submission no. R1-091232 to 3GPP TSG RAN WG1 Meeting #56bis in Seoul, Korea, March 23-27, 2009 by Samsung entitled "Design Considerations for COMP Joint Transmission" relates to this field.

BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 is a diagram of a communication system showing downlink CoMP transmission from two nodes belonging to two different eNBs, according to an embodiment of the disclosure.

Figure 2 is a block diagram illustrating a CoMP resource region definition for a set of cooperating access nodes, according to an embodiment of the disclosure.

Figure 3 is a block diagram illustrating an option for defining a CoMP control region, according to an example of the disclosure.

Figure 4 is a block diagram illustrating an option for defining a CoMP control region, according to an example of the disclosure.

Figure 5 is a block diagram illustrating an option for defining a CoMP control region, according to an example of the disclosure.

Figure 6 is a block diagram illustrating an option for defining a CoMP control region, according to an example of the disclosure.

Figure 7 is a block diagram illustrating when a UE may be configured in CoMP mode, according to an example of the disclosure.

Figure 8 is a flow diagram illustrating backhaul signaling for a CoMP initiation phase, according to an example of the disclosure.

Figure 9 is a block diagram illustrating an exemplary user plane protocol stack for CoMP data forwarding from an anchor eNB to a cooperating eNB, according to an example of the disclosure.

Figure 10 is a flow diagram illustrating backhaul signaling for a CoMP action phase using macro-diversity combining, according to an example of the disclosure.

Figure 11 is a flow diagram illustrating backhaul signaling for a CoMP action phase using switched diversity combining, according to an example of the disclosure.

Figure 12 is a block diagram illustrating anchor mobility with CoMP signaling, according to an example of the disclosure.

Figure 13 is a flow diagram illustrating signaling data call flow during an exemplary anchor mobility process, according to an example of the disclosure.

Figure 14 is a flow chart illustrating a process of establishing a CoMP cooperating set, according to an embodiment of the disclosure.

Figure 15 is a flow chart illustrating a process of establishing a CoMP resource region, according to an embodiment of the disclosure.

Figure 16 is a flow chart illustrating a process of performing backhaul signaling during CoMP transmissions, according to an example of the disclosure.

Figure 17 is a flow chart illustrating a process of establishing a CoMP control region, according to an example of the disclosure.

Figure 18 is a flow chart illustrating a process of initiating CoMP signaling, according to an example of the disclosure.

Figure 19 is a flow chart illustrating a process of transmitting a scheduling request over a backhaul, according to an example of the disclosure.

Figure 20 is a flow chart illustrating a process of transferring anchor functionality from a first access node to a second access node, according to an example of the disclosure.

Figure 21 illustrates an example of a system that includes a processing component suitable for implementing one or more examples disclosed herein.

DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

As used throughout the specification, claims, and Figures, the following terms have the following definitions. Unless stated otherwise, all terms are defined by and follow the standards set forth by the Third Generation Partnership Program (3GPP) technical specifications.

"ACK" is defined as an "Acknowledgement signal."

"ARQ" is defined as "Automatic Repeat Request."

"BH" is defined as "Backhaul."

"C-RNTI" is defined as "Cell Radio Network Temporary Identifier."

"CCE" is defined as "Control Channel Element."

"CoTx" is defined as "Coordinated Transmission."

"CP" is defined as "Cyclic Prefix."

"CRS" is defined as "Common Reference Signal."

"CSI" is defined as "Channel State Indication."

"DCI" is defined as "Downlink Control Information."

"DL" is defined as "Downlink."

"DRS" is defined as "Dedicated Reference Signal."

"eNB" is defined as "E-UTRAN Node B," which is a type of access node in a mobile communication network.

"EPC" is defined as "Evolved Packet Core."

"FDD" is defined as "Frequency Division Duplex."

"GPRS" is defined as "General Packet Radio Service."

"GTP" is defined as "GPRS Tunneling Protocol."

"HO" is defined as "Handover."

"ID" is defined as "Identification," and may also refer to "Identity."

"IP" is defined as "Internet Protocol."

"L1" is defined as "Layer 1."

"LTE" is defined as "Long Term Evolution," which refers to a set of wireless communication protocols, systems, and/or software.

"LTE-A" is defined as "Long Term Evolution, Advanced," which refers to a set of wireless communication protocols, systems, and/or software newer than LTE.

"MAC" is defined as "Medium Access Control."

"MBSFN" is defined as "Multicast Broadcast Single Frequency Network."

"MCS" is defined as "Modulation and Coding Scheme."

"MME" is defined as "Mobility Management Entity."

"NACK" is defined as a "non-acknowledgement signal."

"OAM" is defined as "Operations, Administration, and Management."

"OFDM" is defined as "Orthogonal Frequency Division Multiplexing."

"PCFICH" is defined as "Physical Control Format Indicator Channel."

"PDCCH" is defined as "Physical Downlink Control Channel."

"PDCP" is defined as "Packet Data Convergence Protocol."

"PDSCH" is defined as "Physical Downlink Shared Channel."

"PDU" is defined as "Packet Data Unit."

"PHICH" is defined as "Physical Hybrid ARQ Indicator Channel."

"PMI" is defined as "Pre-coding Matrix Indicator."

"RB" is defined as "Resource Block," which refers to a chunk of Resource Elements.

"RE" is defined as "Resource Elements" or "Resource Element."

"RLC" is defined as "Radio Link Control."

"RNTI" is defined as "Radio Network Temporary Identifier."

"RRC" is defined as "Radio Resource Control."

"RS" is defined as "Reference Signal."

"S1" is defined as the S1 interface, as promulgated by the 3GPP specifications.

"S1-C" is defined as a reference point between an E-UTRAN and an MME.

"S1-U" is defined as a reference point between an E-UTRAN and a SGW.

"SDU" is defined as "Service Data Unit."

"SFN" is defined as "Single Frequency Network."

"SIB" is defined as "System Information Block." A number after "SIB" may refer to a type; thus, "SIB-2" refers to "System Information Block type 2."

"SGW" is defined as "Serving Gateway," which may be hardware and/or software in a wireless communication system that routes and forwards user data packets, as well as performing other functions.

"SON" is defined as "Self Organized Network."

"SPS" is defined as "Semi-Persistent Scheduling."

"TDD" is defined as "Time Division Duplexing."

"TB" is defined as "Transmission Block," which refers to a chunk of data.

"TTI" is defined as "Transmission Time Interval."

"UDP" is defined as "User Datagram Protocol."

"X2" is defined as the X2 interface, as promulgated by the 3GPP specifications.

"X2AP" is defined as "X2 Application Protocol."

"X2-C" is defined as a reference point for control messaging between E-UTRAN and E-UTRAN.

"X2-U" is defined as a reference point for data transfer between E-UTRAN and E-UTRAN.

CoMP signaling may be used to improve UE performance from the perspective of the user. In CoMP signaling, two or more access nodes transmit data and/or signaling information to the UE. One access node serves as an anchor access node. The anchor access node may coordinate the transmissions of the remaining nodes, which may be referred-to as cooperating access nodes.

CoMP signaling may be performed in two different modes. In coordinated scheduling mode, the anchor access node and the cooperating access nodes schedule available resources jointly such that the UE experiences less interference. In joint processing mode, the anchor access node and the cooperating access nodes transmit to the UE on the same frequency and time resources as scheduled by the anchor access node, thereby improving signal quality at the UE.

The embodiments are generally directed to the framework, structure, and control signaling for CoMP transmissions. In an embodiment, a framework, structure, and control signaling for CoMP transmissions should not affect the performance of UEs that are not compatible with LTE-A, such as for example LTE Release 8 UEs. The embodiments described herein provide for this embodiment, and further provide for control signaling to support the coordination and initiation of CoMP transmissions, for assigning CoMP transmissions, and for transferring anchor functionality from one access node to another access node. The following four embodiments are exemplary, as the figures and description provided below provide for many additional embodiments.

A first example provides for establishing various CoMP sets, such as CoMP cooperating sets, CoMP measurement sets, CoMP candidate transmission sets, and CoMP resource regions. These sets and resource regions may be used to enhance CoMP signaling.

A second example provides for the details of CoMP transmission. For example, CoMP transmission in LTE-A only subframes is described, as are multiple options for defining CoMP control regions.

A third example provides for backhaul signaling among the anchor access node and the cooperating access nodes. Backhaul signaling refers to transporting traffic between distributed sites. In the examples provided below, backhaul signaling is used for aspects of CoMP signaling.

A fourth example provides for transferring anchor functionality among access nodes while CoMP signaling is ongoing. Thus, an anchor access node can transfer anchor functionality to a former cooperating access node, with the former anchor access node assuming cooperating access node functions.

As indicated above, the forgoing only reflects a few of the novel embodiments described herein. Additional embodiments are described below and in the various figures.

Description of CoMP Signaling

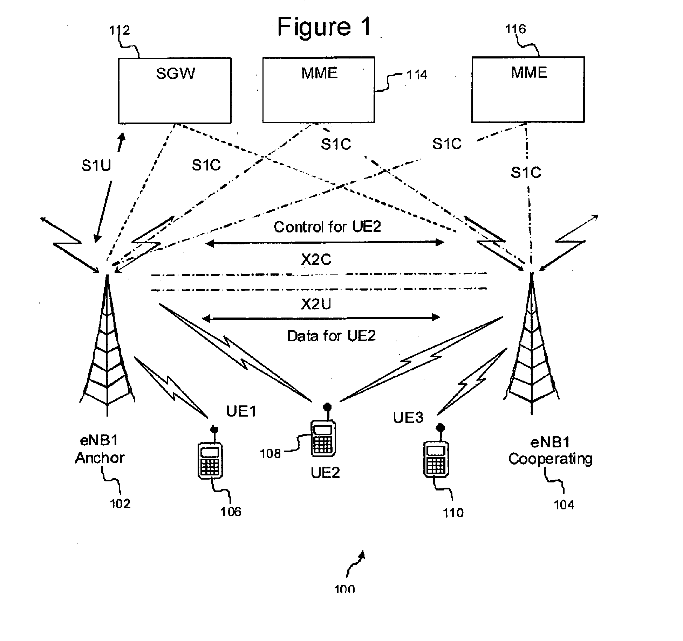

Figure 1 is a diagram of a communication system showing downlink CoMP transmission from two nodes belonging to two different eNBs, according to an embodiment of the disclosure. Communication system 100 may be an LTE-A system in which CoMP transmissions are used. Communication system 100 may include more or fewer components than shown, and/or may include different types of components. In the embodiment shown in Figure 1, communication system 100 includes two access nodes, which are identified as eNB 1 102 and eNB 2 104. Although eNBs are shown, these may be any type of access node in other embodiments, such as relay nodes. Communication system 100 also includes three UEs, including UE 1 106, UE 2 108, and UE 3 110. Communication system 100 further includes software and/or hardware that facilitate wireless communication, such as SGW 112, MME 114, and MME 116. These devices and corresponding software are well known telecommunications devices and may operate according to the technical specifications promulgated by the 3GPP, for example.

CoMP transmission is a technique which provides a reduced interference, real-time downlink transmission simultaneously from two or more access nodes to one or more UEs in two overlapping cells. The embodiments relate generally to the frame, structure, and control signaling for downlink CoMP transmissions. As used herein, the term "cell" may refer to a geographic area serviced by an access node.

Downlink CoMP transmission involves dynamic or semi-static coordination among multiple geographically separated transmission nodes, such as access nodes and/or relay nodes. CoMP transmission may also involve dynamic or semi-static coordination among multiple cells within a node. In one embodiment, CoMP transmission may involve dynamic or semi-static coordination among cells within the same node and cells in geographically separated nodes. CoMP transmission and the various embodiments described herein may be used for either interference avoidance and/or mitigation, such as fractional frequency reuse or interference muting techniques, or to obtain a macro-diversity combining gain at the UE.

In particular, CoMP transmissions may be performed in one of two modes, but might also be performed in both modes. The first mode is coordinated scheduling. In coordinated scheduling, the anchor access node, eNB 1 102, and the cooperating access node, eNB 2 104, schedule the available resources jointly such that the UEs experience less interference. As used herein, the terms "anchor access node," "anchor cell," and "serving cell" may be used synonymously. As used herein, the terms "cooperating access node," and "cooperating cell" may be used synonymously.

In CoMP scheduling mode, the data might be only transmitted by the serving access node (eNB 1 102), but the scheduling decisions are made in coordination among the neighboring access nodes (eNB 2 104). CoMP scheduling may be achieved either through intelligent power allocation to the available resources or through digital/analog beamforming techniques. CoMP scheduling may be transparent to the UEs capable of communication via both LTE and LTE-A networks.

The second mode is joint processing. In joint processing, the anchor access node, eNB 1 102, and the cooperating access node, eNB 2 104, transmit to a UE on the same frequency-time resources as scheduled by the serving access node. In this case, the UE obtains an improved signal quality via joint transmission from both the anchor access node and the cooperating access node. Additionally, the UEs data is transmitted from multiple transmission points, such as access nodes and/or relay nodes, at the same time using the same resources synchronously. Thus, multiple access nodes may transmit the same or different information data to the same UE. The data transmitted from different nodes may be different encoded versions of the same or different data. The encoding of the data can be performed in a coordinated manner among all the access nodes which are involved in CoMP transmission.

In an embodiment, Figure 1 illustrates a procedure for CoMP transmission using both coordinated scheduling and joint processing. UE 1 106 and UE 2 108 are both registered with the EPC through the anchor access node, eNB 1 102. When the eNB 1 102 makes a decision that the UEs should operate in CoMP mode, the eNB 1 102 selects an appropriate cooperating eNB or eNBs to coordinate the downlink transmission.

In the case of joint processing, the anchor access node (eNB 1 102) sends the data to the cooperating access node (eNB 2 104) in advance, along with over-the-air scheduling information such as, but not limited to: the radio frame index, the subframe index, and the exact time-frequency resources over the X2 interface. If the X2 interface is not available, the signaling and/or data may be forwarded via the S1 interface. As shown in Figure 1, eNB 1 102 and eNB 2 104 may send the same data or differently coded versions of the same data bits, or different data bits, to UE 2 108. The UE 2 108 jointly processes the transmissions from all the transmitting nodes in order to achieve a performance gain. This type of transmission may be transparent to LTE-A UEs, and may further be transparent to LTE release 8 UEs, if transmission mode 7 (beam-forming) is used.

In the case of coordinated scheduling, the anchor access node, eNB 1 102, forwards the scheduling information to the cooperating access node, eNB 2 104, in order to reduce the interference to other UEs 106 and 110. The scheduling information may include the interfering PMI, or may include the channel to the interfering node. The radio resources may be scheduled based on the UE's signal quality and on the neighboring eNB's (eNB 2 104) resource usage. As indicated above, coordination may be achieved through X2 signaling or S1 signaling, if X2-C signaling is not available between the access nodes.

Additional information regarding CoMP transmissions may be found in the 3GPP specifications. In particular, the definitions of some CoMP techniques are promulgated in 3GPP TS 36.814.

As described above, the embodiments described herein relate to techniques for allowing new CoMP transmission schemes involving joint processing or coordinated scheduling by providing for CoMP frame configurations and for new CoMP signaling. The new frame configurations and signaling described herein allow for enhanced CoMP transmission to LTE-A UEs without significantly affecting the performance of LTE release 8 or LTE release 9 UEs. The new signaling described herein includes control signaling to support the coordination and initiation of CoMP signaling, for assigning the CoMP transmissions, and for anchor mobility.

Also as described above, the embodiments described herein include at least four embodiments to support downlink CoMP transmission. The first includes control signaling over a backhaul for coordination among multiple access nodes. The term "backhaul" refers to a communication among two or more access nodes, such as eNBs 102 and 104 or a communication between access points and EPC. The second embodiment includes over-the-air control signaling from multiple access nodes. The third embodiment includes control signaling for CoMP initiation. The fourth embodiment includes signaling to support anchor mobility, including over-the-air data, and control transmission during anchor mobility.

These and other embodiments provide for enhanced downlink CoMP transmission. For example, these and other embodiments provide for inter-eNB coordination over X2 or S1. Additionally, these and other embodiments may be extended to intra-eNB coordination where X2/ S1 is not needed or desired.

CoMP sets

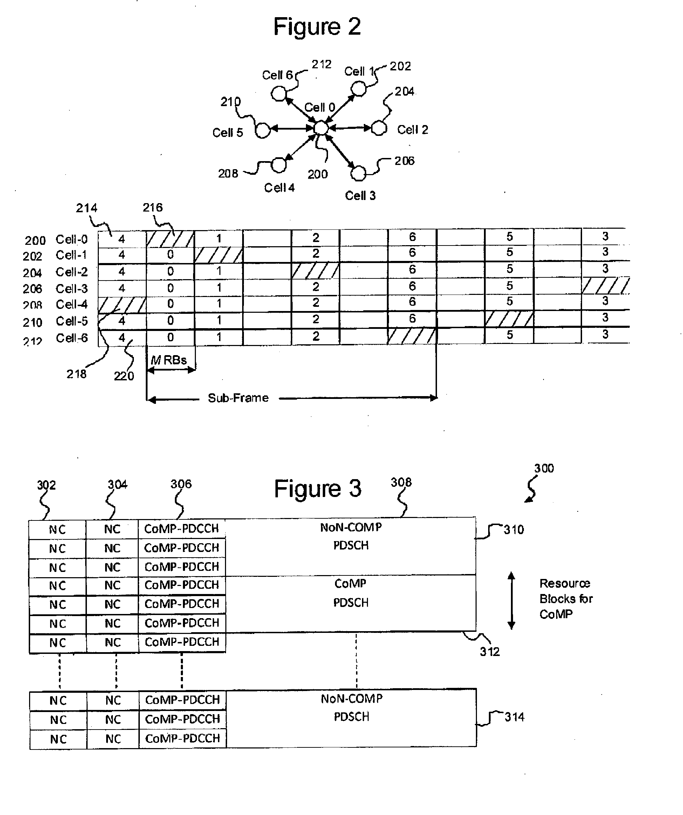

Figure 2 is a block diagram illustrating a CoMP resource region definition for a set of cooperating access nodes, according to an embodiment of the disclosure. As described with respect to Figure 1, an anchor access node may communicate with several cooperating access nodes. In Figure 2, access node 0 200 may be supported by an anchor access node, such as eNB 1 102 in Figure 1, and access node 1 202 may be supported by a cooperating access node, such as eNB 2 104 of Figure 1. The remaining access nodes, access node 2 204, access node 3 206, access node 4 208, access node 5 210, and access node 6 212, are also supported by cooperating access nodes.

The embodiments described with respect to Figure 2 provide for several CoMP sets for supporting CoMP transmissions. These CoMP sets may be either eNB specific or UE specific.

CoMP Cooperating Sets

One type of CoMP set is a cooperating set. A CoMP cooperating set may be the set of nodes with which the anchor eNB may coordinate during CoMP transmissions. The cooperating set may be determined by the anchoring eNB or other network components, and may be based on a given access node's ability to coordinate and transmit to cell edge UEs. The communication between eNBs to define the CoMP cooperating set may be through the X2 interface, as shown in Figure 1.

The CoMP cooperating set may be defined dynamically, or may be defined semi-statically, or may be a pre-configured set. In the case of a dynamic set or a semi static set, a node may send a request, over either the X2 or S1 interface, to a neighboring node. The request may be for the neighbor access node's inclusion into the requesting node's CoMP cooperating set. This request may be followed by an optional ACK/NACK.

The following steps may be used for creating a CoMP cooperating set. First, the anchor eNB, or other access node or network component or system, determines the number of UEs that may benefit from CoMP signaling with each member of the UE's neighbor list. This number may be determined from UE measurement reports, and thus might be non-CoMP specific.

Next, if enough UEs can benefit from CoMP signaling with a specific access node, then that access node is added to a CoMP candidate list. The anchor access node then sends a request to each member of the CoMP candidate list. The request may be sent via a backhaul communication using either of the X2 or S1 interfaces. The CoMP candidate receives the request, and then may return one of an ACK or NACK signal based on access node loading, or based on the candidate's ability to cooperate.

CoMP Measurement Sets

Another type of CoMP set is a CoMP measurement set. A CoMP measurement set is a UE specific set of access nodes that the UE measures to determine the received signal quality in order to assist the CoMP transmission. The CoMP related feedback is sent by the UE to the UE's current serving access node. In one example, the CoMP related feedback is sent by the UE to some or all the access nodes in the UE's measurement set. In another example, the CoMP related feedback is sent by the UE to a set of access nodes which receive UL transmission from the UE, i.e., the UE's UL CoMP reception set. The UE's CoMP measurement set is a subset of the serving access node's CoMP cooperating set.

The CoMP measurement set is determined by the serving access node from the requested measurement reports from the UE. The CoMP measurement set may be a dynamic set or semi-static set. The serving access node may add a new access node to the CoMP measurement set when the received signal quality report from the UE indicates that the received signal quality from the new access node exceeds a threshold configured by the network. Similarly, the serving access node may delete the existing access node from the CoMP measurement set when the received signal quality report from the UE indicates that the received signal quality form the existing access node falls below a threshold. Such a threshold might be configured by the network. Additionally, the serving access node might provide measurement gaps to the UE for measuring specific received signal quality indicators from each member of the UE's CoMP measurement set.

CoMP Candidate Transmission Set

Another type of CoMP set is a CoMP candidate transmission set. A CoMP candidate transmission set may be a UE specific set of access nodes that the serving access node may consider for CoMP transmission to the UE. The CoMP candidate transmission set may be determined by the UE's serving access node from the CoMP and/or non-CoMP measurement reports sent by the UE.

The anchor access node transmits to a number of candidate cooperating access nodes a request for cooperation. The candidate access nodes may, in response, either transmit an ACK signal or a NACK signal. If a candidate access node sends an ACK signal, then the candidate access node is added to the UE's CoMP candidate list. If a candidate access node does not send an ACK signal, or sends a NACK signal, then the candidate access node is not added to the UE's CoMP candidate list.

CoMP resource regions

Attention is now turned from CoMP sets to CoMP resource regions, which define regions which are designated for a particular anchor access node. In order to improve the coordination of CoMP transmission, a CoMP resource region may be defined in terms of subframes and/or resource blocks within a subframe. Each access node may have a CoMP resource region where the access node is the anchor for CoMP transmission; in other words, a given access node may have a resource region where that access node has the highest priority to assign resources for the CoMP transmission. This distribution is shown with respect to the table shown in Figure 2, and is further described below.

The identity of the CoMP resource region is provided to all neighboring eNBs that are in the CoMP cooperating set. A request to establish a CoMP resource region may be transmitted from the anchor eNB to these eNBs. The request to establish a CoMP resource region may be followed by an optional ACK/NACK.

The CoMP resource region, which may be either dynamic or pre-configured, may be defined using either contiguous resources or distributed resources. If there are no UEs suitable for CoMP transmission, then each access node may schedule its own non-CoMP UEs in the CoMP resource region. Different CoMP resource regions for neighboring access nodes can be coordinated in order to reduce interference.

The CoMP resource region for two cooperating access nodes may be communicated on the X2 interface. The X2 signaling that indicates CoMP resource regions for all the access nodes within the indicated eNB to its neighboring eNBs may include one or more parameters. Exemplary parameters include system frame number, subframe number, allocated resource block pattern within the subframe, periodicity, and/or others.

The number of resources assigned for UEs depends on the system load. Once a CoMP resource region is defined between neighboring nodes, the size of a resource region may be updated through X2 signaling. The size of the CoMP resource region either may be increased or decreased based on demand.

Returning to Figure 2, the table shown illustrates an example of CoMP resource regions. Areas 216 shown with cross-hatching represent CoMP resource regions. All of the UEs associated with a given access node with cross-hatching are prioritized first relative to other access nodes. Areas 214 shown with a number also represent resource regions.

All UEs whose anchor is "access node-i" are given priority over UEs in different cooperating access nodes. In a specific example, if access node 4 208 is the anchor access node, then all the UEs in access node 4 208 are prioritized first relative to UEs in the cooperating access nodes, which are in this case access node 0 200, access node 1 202, access node 2 204, access node 3 206, access node 5 210, and access node 6 212. Figure 2 shows this relationship by showing cross-hatching in area 218 to indicate that access node 4 208 is the anchor access node. The remaining access nodes are cooperating relative to anchor access node 4 208; thus, for example, area 220 shows a number "4" to indicate that access node 6 212 is cooperating relative to access node 4 208.

Although Figure 2 shows that the neighbors to access node 0 200 all have the same region, the neighbors to access node 0 200 might not have the same region assigned as the CoMP resource region. CoMP resource regions may be assigned through coordination among access nodes and based on the system load.

The following steps may be taken for CoMP transmission in a resource region. First, the UE provides the anchor access node feedback on the channel measurements and/or channel quality for each member of its CoMP measurement set. The anchor access node then decides whether or not to use CoMP transmission.

If CoMP transmission using joint processing is scheduled, then the following sub-processes may occur. The anchor access node first informs the cooperating access nodes in the cooperating set regarding the scheduling information, which may include resources, transmission modes, encoding schemes, and others. Both the anchor access node and the cooperating access node or access nodes then transmit to the UE using the assigned CoMP transmission scheme on the assigned frequency-time resources. For transmission mode 7 for release 8 UEs, the DRS, which is also transmitted using the same CoMP transmission scheme, may be used for channel estimation and demodulation.

If CoMP transmission is used for interference avoidance, then the anchor access node informs the cooperating access nodes in the cooperating set of the interfering PMI. The anchor access node also informs the cooperating access node or access nodes in the cooperating set regarding resources that should not be used in order to avoid using the interfering PMI.

To support the feedback on a specific CoMP resource region, there may be CSI RS either within the CoMP resource region or distributed over the band for both the anchor and the cooperating access nodes. In the case of coordinated scheduling, the CSI RS within the CoMP resource region may be used for channel measurement.

Figure 3 is a block diagram illustrating an option for defining a CoMP control region, according to an example of the disclosure. In order to allow CoMP transmission for a control channel, a CoMP control region may be defined. Several options exist for defining CoMP control regions. Four CoMP control options are described below with respect to Figure 3 through Figure 6. Each of these options may be used in a CoMP or LTE-A only subframe. Some of these options may also be used in a regular release-8 subframe in a Frequency Division Multiplexing (FDM) manner between the CoMP resource regions and Rel-8 PDSCH.

CoMP Transmission in LTE-A only subframes

Before describing the CoMP control regions described with respect to Figures 3 through 6, CoMP transmission in LTE-A only subframes is discussed. In order to remain backward compatible to release-8 UEs, channel estimation issues involving release 8 UEs may need to be addressed. For example, an issue with defining a new LTE-A only subframe is that if the CRS are removed from the PDSCH region, and replaced with DRS or CoMP-CRS or CoMP-DRS, then issues may arise when release-8 UEs may try to interpolate across subframes when performing channel estimation.

One possible technique to address this issue is to reuse an MBSFN subframe, as defined in release 8 for LTE-A only transmission. In this case, some or all of the RBs in the LTE-A subframe may be used for CoMP transmission for LTE-A UEs. The same MBSFN subframe may also multiplex CoMP transmissions with non-CoMP transmissions and with other LTE-A services and relay backhaul.

In an example, the anchor access node may broadcast the MBSFN subframe assignment in SIB-2. A release 8 UE may assume that the subframe is an MBSFN subframe and skip the subframe for channel interpolation except the control region part of the subframe. However, LTE-A UEs may be informed whether this subframe is an LTE-A subframe, or a real MBSFN subframe.

When an MBSFN subframe is configured, the PDCCH still uses CRS and might be transmitted only on the first few OFDM symbols from the anchor access node. The rest of the OFDM symbols where CoMP resource regions are defined may be sent using the DRS from the anchor and the cooperating access node. The cooperating access node signals the LTE-A subframe as an MBSFN subframe in order to inform the LTE release 8 UEs not to interpolate across the LTE-A subframe during channel estimation.

Within the MBSFN subframe, DRS are defined for data demodulation and channel estimation. CSI RS are defined for channel measurement. Separate CSI RS might be required from each member access node of the cooperating set.

For an LTE-A subframe, a normal CP may be used rather than an MBSFN CP. An additional indicator may also be included to specify which CP is used.

Additional signaling may be used to indicate to the LTE-A UE that the MBSFN subframe is an LTE-A subframe. For example, SIB-2 may be used to indicate which subframes are used for MBSFN. An additional bitmap may be used to indicate which of the indicated MBSFN subframes are used for LTE-A only transmission. An exemplary embodiment of a SIB-2 information element is provided below:

```
-- ASN1START
SystemInformationBlockType2 ::=        SEQUENCE {
        ac-BarringInfo                        SEQUENCE {
                ac-BarringForEmergency                BOOLEAN,
```

```
                    ac-BarringForMO-Signalling              AC-BarringConfig
                    OPTIONAL,  -- Need OP
                    ac-BarringForMO-Data                    AC-BarringConfig
                    OPTIONAL   -- Need OP
            }
                                            OPTIONAL,  -- Need OP
        radioResourceConfigCommon
    RadioResourceConfigCommonSIB,
            ue-TimersAndConstants                   UE-
TimersAndConstants,
            freqInfo                                SEQUENCE {
                ul-CarrierFreq                          ARFCN-
ValueEUTRA                  OPTIONAL,  -- Need OP
                ul-Bandwidth                        ENUMERATED {n6,
n15, n25, n50, n75, n100}


                                            OPTIONAL,  -- Need OP
                additionalSpectrumEmission
    AdditionalSpectrumEmission
            },
            mbsfn-SubframeConfigList             MBSFN-
SubframeConfigList               OPTIONAL,  -- Need OR
            timeAlignmentTimerCommon             TimeAlignmentTimer,
            ...
            LTE-A-SubframeConfigList             LTE-A-SubframeConfigList
            OPTIONAL,       -- Need OR
        }
    AC-BarringConfig ::=                     SEQUENCE {
            ac-BarringFactor                        ENUMERATED {
                                                        p00,
p05, p10, p15, p20, p25, p30, p40,
```

```
                                                                    p50,
p60, p70, p75, p80, p85, p90, p95},
                ac-BarringTime                         ENUMERATED {s4,
s8, s16, s32, s64, s128, s256, s512},
                ac-BarringForSpecialAC                 BIT STRING
(SIZE(5))
        }
        MBSFN-SubframeConfigList ::=           SEQUENCE (SIZE
(1..maxMBSFN-Allocations)) OF MBSFN-SubframeConfig
        MBSFN-SubframeConfig ::=              SEQUENCE {
            radioframeAllocationPeriod              ENUMERATED {n1, n2,
n4, n8, n16, n32},
            radioframeAllocationOffset              INTEGER (0..7),
            subframeAllocation                      CHOICE {
                oneFrame                                BIT STRING
(SIZE(6)),
                fourFrames                              BIT STRING
(SIZE(24))
            }
        LTE-A-SubframeConfigList ::=          SEQUENCE (SIZE (1..maxMBSFN-
Allocations)) OF LTE-A-SubframeConfig
        LTE-A-SubframeConfig ::=             SEQUENCE {
            radioframeAllocationPeriod              ENUMERATED {n1, n2,
n4, n8, n16, n32},
            radioframeAllocationOffset              INTEGER (0..7),
            subframeAllocation                      CHOICE {
                oneFrame                                BIT STRING
(SIZE(6)),
                fourFrames                              BIT STRING
(SIZE(24))
            }


        }
                    -- ASN1STOP
```

In this exemplary SIB-2 information element, the LTE-A-SubframeConfigList defines the subframes that are reserved for CoMP transmissions in the downlink. Radio frames that contain LTE-A subframes occur when the following equation is satisfied:

SFN mod radioFrameAllocationPeriod = radioFrameAllocationOffset. Value n1 for radioFrameAllocationPeriod denotes value 1, n2 denotes value 2, and so on. When fourFrames is used for subframeAllocation, the equation defines the first radio frame referred-to in the description below. Values n1 and n2 are not applicable when fourFrames is used. The term "subframeAllocation" defines the subframes that are allocated for LTE-A transmissions within the radio frame allocation period defined by the radioFrameAllocationPeriod and the radioFrameAllocationOffset.

For the term "oneFrame," the value "1 ", for example, denotes that the corresponding subframe is allocated for LTE-A. The following exemplary mapping applies: For FDD, the first or leftmost bit defines the LTE-A allocation for subframe #1, the second bit for #2, third bit for #3, fourth bit for #6, fifth bit for #7, and sixth bit for #8. For TDD, the first or leftmost bit defines the allocation for subframe #3, the second bit for #4, third bit for #7, fourth bit for #8, and fifth bit for #9. Uplink subframes might not be allocated. The last bit might not be used.

The term "fourFrames" refers to a bit-map indicating LTE-A subframe allocation in four consecutive radio frames, with the value "1" denoting that the corresponding subframe is allocated for LTE-A. The bit map may be allocated as follows: For FDD, starting from the first radio frame and from the first or leftmost bit in the bitmap, the allocation applies to subframes #1, #2, #3, #6, #7, and #8 in the sequence of the four radio frames. For TDD, starting from the first radio frame and from the first or leftmost bit in the bitmap, the allocation applies to subframes #3, #4, #7, #8, and #9 in the sequence of the four radio frames. The last four bits need not be used. Uplink subframes need not be allocated.

Returning to the subject of the MBSFN indicator, release 8 UEs may use the MBSFN indicator to identify whether the subframe is an MBSFN subframe or a normal subframe. An LTE-A UE may use both the MBSFN indicator and the LTE-A indicator to distinguish between an MBSFN subframe and an LTE-A subframe.

The following table illustrates how the two indicators may be used:

| MBSFN | LTE-A | Subframe Interpretation |
| --- | --- | --- |
| 0 | 0 | Normal sub frame |
| 1 | 0 | MBSFN |
| 1 | 1 | LTE-A (normal subframe); LTE (MBSFN) |
| 0 | 1 | Reserved |

Alternatively, a real MBSFN subframe may also be used for transmitting CoMP data to LTE-A UEs. In this case, a new DCI format is introduced to allow the LTE-A UEs to be sent a DL CoMP or non-CoMP assignment within the MBSFN subframe. For the LTE-A UEs, it could detect this new DCI format and start to receive the corresponding CoMP reception. For the LTE Release 8 or LTE release 9 UEs, it might not detect the new DCI formats. The blind decoding of the LTE-A UEs may slightly increased but the flexibility may be achieved. The impact to the LTE Release 8 or LTE Release 9 UEs may be negligible.

CoMP for Control Channel

In order to allow CoMP transmission for a control channel, a CoMP control region may be defined. As described above, several options exist for defining CoMP control regions. One of those options is shown in Figure 3.

Table 300 shows CCEs for the PDCCH and corresponding resource blocks. Specifically, the CCEs for the PDCCH include non-CoMP PDCCH CCE (NC) 302, non-CoMP PDCCH CCE (NC) 304, and CoMP PDCCH CCE 306. The resource blocks are shown in column 308. The resource blocks include non-CoMP PDSCH 310 and non-CoMP PDSCH 314, as well as CoMP PDSCH 312. CoMP PDSCH 312 is a resource block containing data for CoMP transmissions.

The OFDM symbols for the current release-8 PDCCH may be divided into CoMP and non-CoMP control regions. The non-CoMP control region may be decoded using the normal CRS, which is located in the first two OFDM symbols. The CoMP control region may be located in the remaining OFDM symbols reserved for the PDCCH. Within the CoMP control region, CoMP-CRS may be included for decoding the CoMP control information.

In this approach for defining a CoMP control region in an LTE-A subframe, LTE release 8 UEs may decode the non-CoMP control region to obtain uplink assignments, power control commands, or a PHICH. However, such UEs might not be assigned downlink data in such a subframe. On the other hand, LTE-A UEs may determine whether or not the CoMP control region exists and may decode the control information and data if the CoMP control region is defined. Both the CoMP and non-CoMP assignments for LTE-A UEs may be multiplexed into a LTE-A subframe, as shown in Figure 3.

In the example shown in Figure 3, the UE decodes the PCFICH to determine the number of OFDM symbols used for the non-CoMP PDCCH in the current subframe. Another indicator, such as a CoMP DCI, may be used to indicate the number of OFDM symbols for the CoMP PDCCH. In one example, the CoMP DCI is sent in the non-CoMP PDCCH region. In another example, the number of OFDM symbols for the CoMP PDCCH may be assumed to be equal to the number of OFDM symbols used for the non-CoMP PDCCH in the same subframe. In still another example, dedicated RRC signaling may be used to indicate the number of OFDM symbols used for the CoMP PDCCH.

An example of dedicated RRC signaling may be a semi-statically configured or fixed number of OFDM symbols that may be used for the CoMP PDCCH. Another example of dedicated RRC signaling includes a semi-statically configured total number of OFDM symbols that may be used for the non-CoMP and CoMP PDCCH together. In this case, the number of OFDM symbols for the CoMP PDCCH in a given subframe may be obtained by subtracting the PCFICH signaled number of OFDM symbols for the non-CoMP PDCCH from the configured total number of control channel OFDM symbols.

In an example, the OFDM symbols by which the CoMP PDCCH may be communicated need not contain CRS. Instead, a CoMP reference signal (CoMP-RS) may be used by all the cooperating access nodes.

After decoding the PCFICH, the UE may then search the CoMP control region for CoMP PDCCH assignments using blind decoding with the UE's C-RNTI. Interleaving of the PDCCH CCEs for the CoMP control region may be performed separately from the interleaving for the non-CoMP region. Further, the cell identification of the anchor access node may be used for the interleaving in CoMP control region. In another example, a CoMP control region specific identification may be used for the interleaving in the CoMP region. Non-CoMP control may also be used to schedule CoMP data.

One CoMP control region may be defined for one set of cooperating access nodes which are involved in CoMP PDCCH transmission to one or more UEs. Different set of cooperating access nodes may have different CoMP control regions. In this case, different CoMP control regions may be separated by different OFDM symbols. The set of cooperating access nodes where a CoMP control region may be defined may be different from the CoMP transmission points for a UE whose CoMP PDCCH is sent within this CoMP control region. In one example, the CoMP transmission points for a UE may be a subset of the access nodes involved in CoMP PDCCH transmission to the UE.

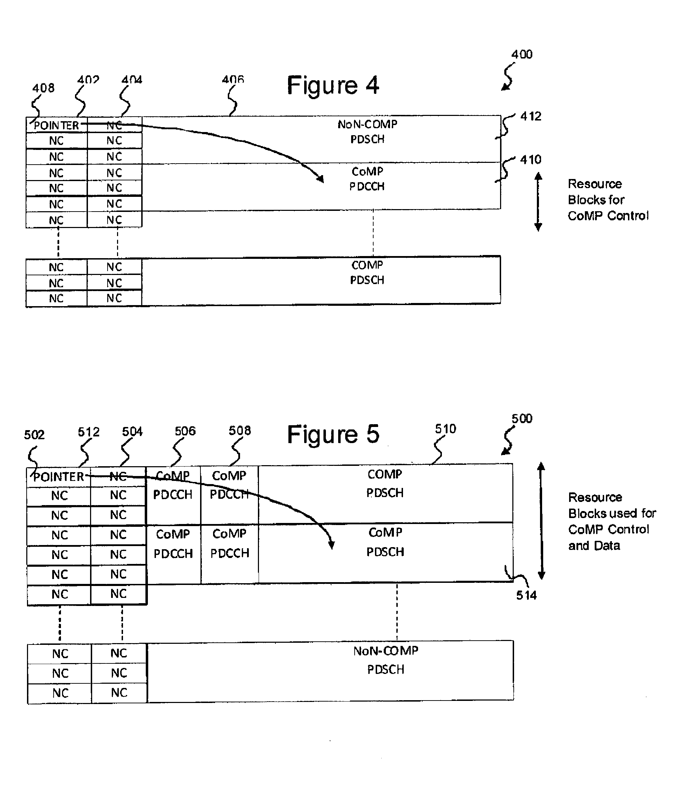

Figure 4 is a block diagram illustrating an option for defining a CoMP control region, according to an example of the disclosure. The option for defining a CoMP control region shown in Figure 4 is an alternative to the option shown with respect to Figure 3. Similar to Figure 3, in table 400 the column 402 and column 404 represent CCEs for the PDCCH and column 406 refers to the RBs used for CoMP transmissions.

In the example shown in Figure 4, an additional DCI format is introduced and sent at either a fixed location or in a common search space within the non-CoMP control region. The new DCI format may contain a pointer to a CoMP control region. Thus, for example, pointer 408 points to CoMP PDCCH 410.

The CoMP control region may include one or more RBs in the current subframe. The CoMP control region includes CoMP CRS for decoding the CoMP control. The same DCI formats may be used for non-CoMP control, as in RB 412. The remaining RBs may be used either for CoMP data or for non-CoMP data. This approach may also be used for extending the PDCCH region for non-CoMP control, if desired or required.

As described above for this option, the new DCI format may contain a CoMP control pointer 408, but may also use a control channel extension pointer. This DCI format may also use a group RNTI. Additionally, this DCI format may be sent on a predefined CCE or group of CCEs to indicate the extension region for the PDCCH. The UE may also search the common search space for the control pointer.

Alternatively, the CoMP control region or the extended control region may be sent on a predefined set of RBs. Either region may be indicated to the UEs through RRC signaling.

One CoMP control region may be defined for one set of cooperating access nodes which are involved in CoMP PDCCH transmission to one or more UEs. Different set of cooperating access nodes may have different CoMP control regions. In this case, different CoMP control regions may be different sets of RBs. The set of cooperating access nodes where a CoMP control region is defined may be different from the CoMP transmission points for a UE whose CoMP PDCCH is sent within this CoMP control region. In one example, the CoMP transmission points for a UE may be a subset of the access nodes involved in CoMP PDCCH transmission to the UE.

For CoMP control decoding, the reference signals may be sent by both the anchor and the cooperating access nodes in the RBs that contain the CoMP control. All of the reference signals may be transmitted by both nodes, or the reference signals may be shared.

For non-CoMP control, CRS may be included for channel estimation and data demodulation. The scrambling may use the cell ID of the anchor access node. CCEs may be defined within the CoMP control region, and interleaving may also be applied to the CCEs.

The approach described with respect to Figure 4 may also be used in an LTE subframe. In this case, the LTE-A UEs may ignore the non-CoMP CRS of both the serving and cooperating access nodes within the CoMP resource region. An additional DCI format may be introduced for LTE-A UEs to indicate that the CRS for the serving and the cooperating access nodes may be ignored. The release 8 UEs may then be multiplexed with the LTE-A UEs.

Figure 5 is a block diagram illustrating an option for defining a CoMP control region, according to an example of the disclosure. The option for defining a CoMP control region shown in Figure 5 is an alternative to the options shown with respect to Figure 3 or Figure 4. Similar to Figure 4, column 502 and column 504 of table 500 represent CCEs for the PDCCH. Similar to Figure 3, column 506 and column 508 refer to CCEs for the CoMP PDCCH. Similar to both Figure 3 and Figure 4, column 510 refers to the RBs used for CoMP control and for data.

In the example shown in Figure 5, an additional DCI format 512 may be introduced to point to a CoMP control region or CoMP data resource region. These CoMP regions may be a group of RBs that may be either contiguous or distributed over the band. In the example of Figure 5, pointer 512 points to the CoMP PDSCH 514.

The CoMP RBs may contain a CoMP PDCCH region (columns 506 and 508) which may be contained in the first few symbols of the CoMP RBs. The DCI format may also dynamically signal the number of symbols reserved for the CoMP PDCCH region. The length of this region may be semi-statically configured by RRC signaling. In an additional example, the CoMP RBs may also be semi-statically configured using RRC signaling instead of using the DCI CoMP resource pointer.

One CoMP PDCCH region may be defined for one set of cooperating access nodes which are involved in CoMP PDCCH transmission to one or more UEs. Different set of cooperating access nodes may have different CoMP PDCCH regions within the CoMP region. In this case, different CoMP PDCCH regions may be located at different OFDM symbols within the CoMP region. In another example, different CoMP PDCCH regions may be located at different RBs within the CoMP region. The set of cooperating access nodes where a CoMP PDCCH region is defined may be different from the CoMP transmission points for a UE whose CoMP PDCCH is sent within this CoMP PDCCH region. In one example, the CoMP transmission points for a UE may be a subset of the access nodes involved in CoMP PDCCH transmission to the UE.

For the CoMP control option shown in Figure 5, the CoMP PDCCH region contains CoMP CRS for channel estimation and demodulation. The CoMP PDSCH regions (such as for example RB 514) may contain CoMP DRS for channel estimation and demodulation. CoMP CCEs may be defined within the CoMP PDCCH region. The CoMP CCEs may be interleaved for frequency and interference diversity.

The UEs may use blind detection to decode the CoMP PDCCH. The UE's CoMP PDCCH may indicate which of the CoMP RBs contain the CoMP data.

The approach described with respect to Figure 5 may also be used in an LTE subframe. In this case, the LTE-A UEs may ignore the non-CoMP CRS of both the serving and cooperating access nodes within the CoMP resource region. An additional DCI format may be introduced for LTE-A UEs so that the CRS for the serving and the cooperating access nodes may be ignored. The release 8 UEs may then be multiplexed with the LTE-A UEs.

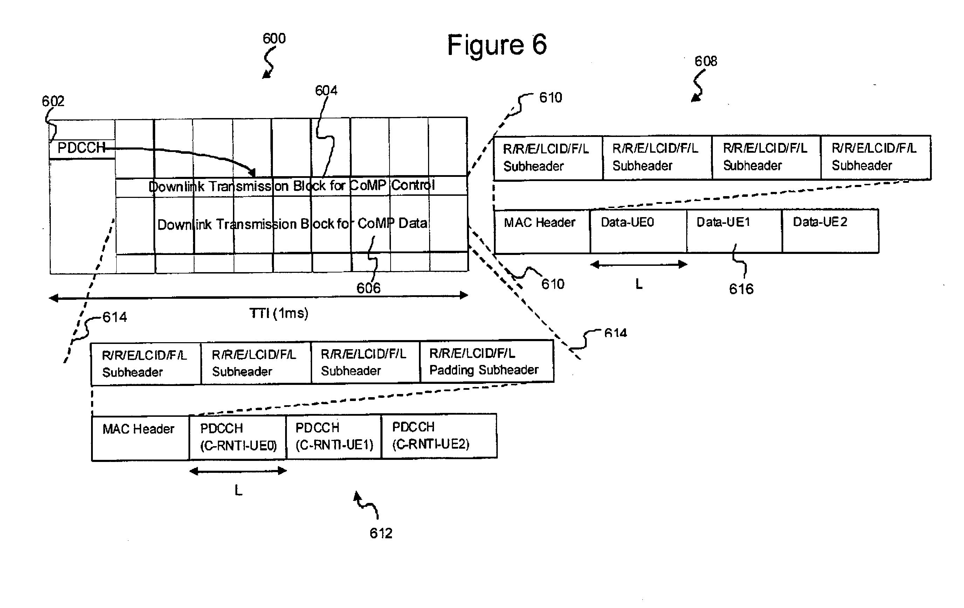

Figure 6 is a block diagram illustrating an option for defining a CoMP control region, according to an example of the disclosure. The option for defining a CoMP control region shown in Figure 6 is an alternative to the options shown with respect to Figure 3 through Figure 5. Similar Figure 3 through Figure 5, table 600 represents a set of subframes in a TTI. As shown in Figure 6, "L" indicates a length of a data field.

In the example of Figure 6, a CoMP pointer region 602 may be used to point to a CoMP control region 604 and a CoMP data region 606. In this case, the CoMP control region 604 and the CoMP data region 606 each contain one physical TB. The physical TB may contain multiple MAC PDUs that are destined for different UEs. Thus, for example, CoMP control region 604 contains MAC PDUs 608, as indicated by the corresponding phantom lines 610. Similarly, CoMP data region 606 contains MAC PDUs 612, as indicated by the corresponding phantom lines 614.

Stated differently, in this example multiple CoMP regions may be configured for coordination with different nodes. The UE may decode the whole RB and find corresponding data. CCEs may be contained in the MAC PDU and may be coded together.

The PDCCH of pointer 602 may be the PDCCH for an "$i^{th}$" UE. A "Data-UE#" field in the MAC PDU of the CoMP control region 604, such as for example "Data-UE1" 616, may be a data burst for that UE in the form of MAC PDUs. The MAC PDUs may include both the data payload as well as MAC control elements from the access node to the UE. The length "L" of "Data-UE1" is identified by the length field.

Backhaul Signaling

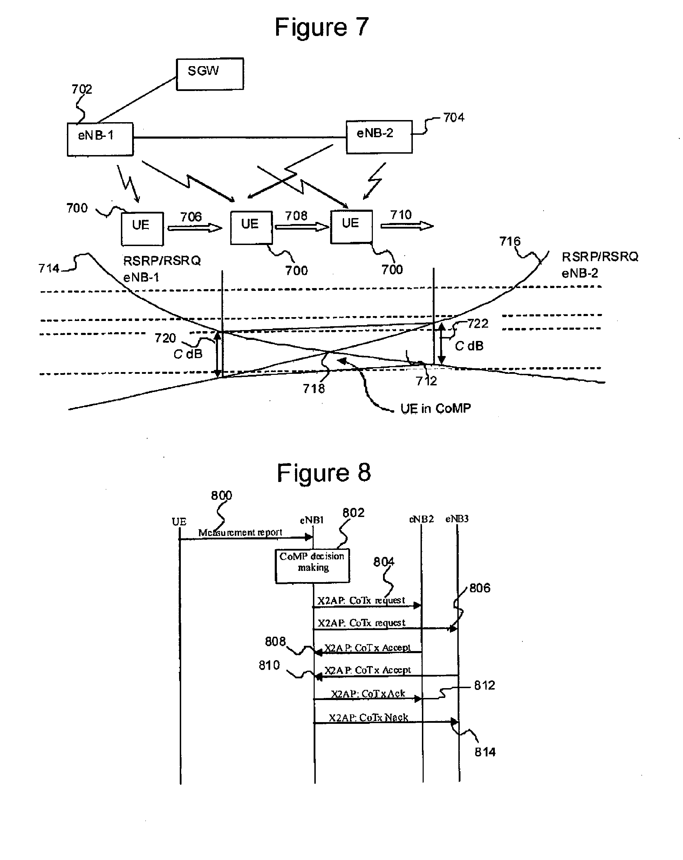

Figure 7 through Figure 11 are figures relating to backhaul signaling that may be used for successful CoMP initiation and CoMP transmission. In order to support CoMP transmission, backhaul signaling might be required or desired for coordination of CoMP transmissions. The anchor access node and the coordinating access nodes should agree on when to cooperate and should agree on what resources are used for CoMP transmission.

In the case of CoMP joint processing, once CoMP transmission has been decided, the data and the scheduling information may be forwarded by the anchor access node to the cooperating access nodes. The scheduling information may include the ID of the scheduled UE, the transmission mode, the MCS, the assigned resources, and possibly other information. For subsequent transmissions, which may be either synchronous or asynchronous, only the new scheduling information might be forwarded to the cooperating access nodes, because the cooperating access nodes might already have the data.

In the case of interference coordination, the anchor access node may either indicate which PMI or precoding weight should be used on the specified resources, or which PMI or precoding weight should be avoided. Each access node may have a region of the band where the corresponding access node is the anchor for CoMP transmission using either coordinated scheduling or joint processing. This region of the band may be defined dynamically through backhaul signaling, or may be a preconfigured region.

CoMP Initiation

Figure 7 is a block diagram illustrating when a UE may be configured in CoMP mode, according to an example of the disclosure. In Figure 7, the UE 700 is moving from eNB 1 702 to eNB 2 704, as shown by arrows 706, 708, and 710. At least after moving between eNB 1 702 and eNB 2 704, after arrows 706, the UE 700 is able to receive communications from both eNBs. During at least this time, the UE may be eligible for CoMP mode, as shown at CoMP region 712. CoMP region 712 is an area bounded roughly by minimum reception levels of signals from each eNB. Line 714 represents a relative strength of a signal received from eNB 1 702 and line 716 represents a relative strength of a signal received from eNB 2 704. The intersection 718 of lines 714 and 716 represents about the point at which the UE 700 is receiving about the same signal strength from both eNB 1 702 and eNB 2 704.

In the example of Figure 7, the UE 700 is initially registered with eNB 1 702. The data is routed to eNB 1 702. When the signal quality from eNB 1 702 and eNB 2 704 are close, the UE may be configured in CoMP mode. The term "close" means within a first range of the first access node and within a second range of the second access node such that combining the signals from the first and second access nodes results in about a predetermined threshold signaling gain, as represented by "C dB" 720 or "C dB" 722.

Figure 8 is a flow diagram illustrating backhaul signaling for a CoMP initiation phase, according to an example of the disclosure. The flow diagram shown in Figure 8 relates to the events described with respect to Figure 7. The terms "eNB 1," "eNB 2," and "eNB 3" are used with respect to Figure 8, though these terms may refer to any type of access node capable of performing CoMP procedures. Additionally, more or fewer access nodes may be used relative to the example described in Figure 8.

When the eNB 1 receives the measurement report from the UE (800), eNB 1 makes a decision regarding use of CoMP signaling and regarding use of the CoMP transmission set (802). Then, eNB 1 sends a CoTx request to eNB 2 (804 and 806) in order to inform the members of the UE's candidate transmission set about the UE's status. Based on the availability of resources, and possibly other factors, eNB 2 and eNB 3 may accept the request and send a CoTx accept signal to eNB 1 (808 and 810). If the cooperating eNB cannot accept the request, then the cooperating eNB may send a CoTx reject message back to eNB 1.

In an example, eNB 1 may select only one of the eNBs as the potential cooperating eNB, even when both eNB 2 and eNB 3 have accepted the request. In this case, eNB 1 may send a CoTx ACK message back to eNB 2 (812) as well as a CoTx NACK message (814) to eNB 3 in order to indicate that eNB 3 is not part of the CoMP transmission set. When eNB 3 receives the CoTx NACK message, eNB 3 may cancel all the over the air resource reservations for the UE.

In an example, eNB 1 may prepare multiple cooperating eNBs for inclusion into the CoMP candidate transmission set in parallel. Eventually, eNB 1 may select one or more of these multiple eNBs for actual inclusion when performing CoMP transmissions.

In another example, eNB 1 may attempt to prepare one eNB at a time. In case of unsuccessful preparation, another eNB may be contacted.

In yet another example, eNB 1 may prepare multiple cooperating eNBs and schedule the data through all of them intermittently. In other words, eNB 1 might not schedule the data through all of the eNBs all the time. In this example, the UE achieves improved performance through switched diversity.

Coordination of Data Transmission

Once the eNBs are prepared as described with respect to Figure 8, the data and/or signaling of the UE may be routed by the eNB 1 to eNB 3, along with the over the air resource scheduling information. This process may be referred to as an action phase.

The example of Figure 8 shows use of the X2AP. The X2AP may be a scheduling request which includes a number of parameters. These parameters include, but are not limited to, cell identity or identities; a system frame number of a cooperating access node for the scheduled packet or universal time for scheduling; a subframe number in which the packet has been scheduled; RBs over which the packet is scheduled; OFDM symbols allocated for control in the allocated subframe; transmission mode parameters including DRS, CSI, and other information; MCS; average power per RE over data symbols; and average power per RE over the RS symbols.

The X2AP scheduling request message may inform the cooperating eNB (eNB 2 in this case) when the data is to be scheduled. The anchor eNB (eNB 1 in this case) may schedule the data such that the cooperating eNB has enough time to schedule the packet after receiving the packet over the backhaul. This time delay may be used to account for the time used to transmit information from one eNB to another over a backhaul communication.

In an example, a time to schedule is based on the following equation:

$$TTS = CT + EBD + T_1,$$

where TTS is "Time to Schedule," "CT" is "Current Time," "EBD" is "Expected Backhaul Delay," and "$T_1$" is a variable number that varies based on a system load of the cooperating access node eNB 2. In an example, the anchor eNB (eNB 1 in this case) may be informed of this timer, "$T_1$", during the initiation phase, such as at step 808.

In another example, a different TTS may be selected based on an expected maximum backhaul delay. However, so selecting the TTS may result in excessive delay in terms of degraded user experience and longer overall data transmission times. In contrast, setting a time delay equal to the equation defined above may provide for a more dynamic, flexible, and efficient TTS.

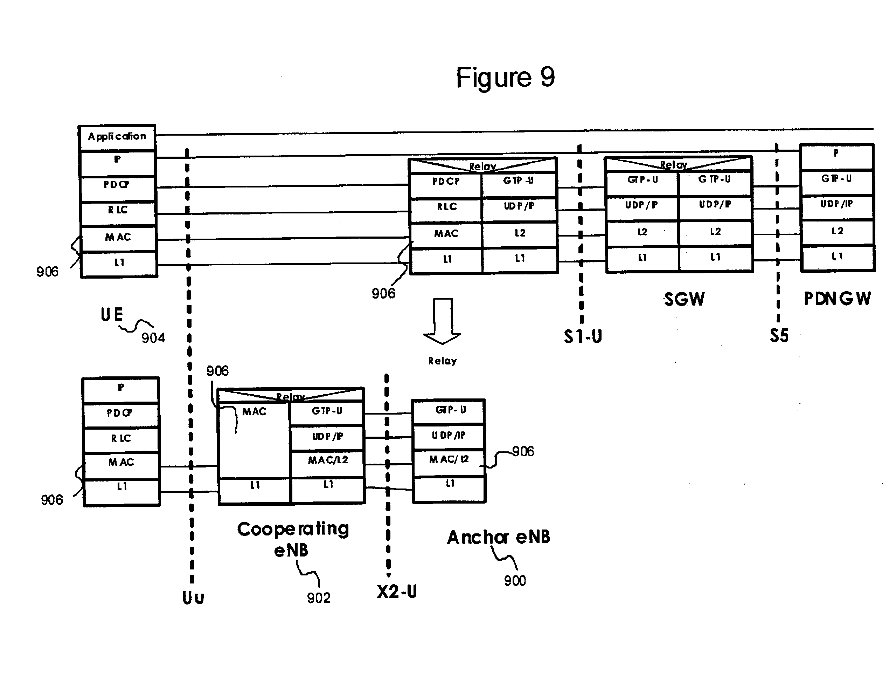

Figure 9 is a block diagram illustrating an exemplary user plane protocol stack for CoMP data forwarding from an anchor eNB to a cooperating eNB, according to an example of the disclosure. Specifically, the example of Figure 9 shows the protocol stack for forwarding of data and/or signaling from an anchor eNB 900 to a cooperating eNB 902. Anchor eNB 900 could be eNB 1 in Figure 8, and cooperating eNB 902 could be eNB 2 or eNB 3 of Figure 8. Although the example of Figure 9 refers to eNBs, other types of access nodes could also be used, such as relay nodes, or other LTE-A access nodes.

The protocol stack shown in Figure 9 shows that the user data and/or signaling may be forwarded at the MAC PDU level 906. Forwarding user data and/or signaling at the MAC PDU level bypasses cell specific data and/or signaling and data encryption and RLC segmentation/concatenation at the cooperating eNB 902, thereby increasing the speed of transmission. The cooperating eNB 902 may receives the MAC PDU from the anchor eNB 900, and may transmit the MAC PDU to the UE 904 in transparent mode according to the resource scheduling coordination information received from the anchor eNB 900.

Nevertheless, the MAC PDU received at cooperating eNB 902 may be encoded and scrambled according to the provisions in the 3GPP technical specifications 36.211. In one example, the encoded data may be scrambled using the cell ID of the anchor eNB 900 before generating the base band modulation symbols. A useful property of this technique is that the processing to schedule the packet at the cooperating access node is minimal. However, additional delay may be experienced in preparing the X2-U payload.

In a different example, the anchor eNB may forward the PDCP payload to the cooperating access nodes, along with the encryption parameters, RLC segmentation/concatenation parameters, resource scheduling parameters, and possibly other parameters. In addition, the IP packets sent from the SGW may be synchronized across all of the access nodes. An attractive feature of this technique is that additional packet delay is eliminated with respect to forwarding the data from the anchor eNB to the cooperating eNBs.

Several options exist with respect to synchronizing the CoMP transmissions within the cyclic prefix (CP). In one option, during the CoMP initiation process, the anchor eNB and the cooperating eNB(s) may calibrate the radio frame and subframe numbers. This process may be accomplished by the anchor eNB, or by a central network entity such as an OAM entity or a SON entity. The anchor access node may request the cooperating access nodes to send the radio frame number and subframe number for an indicated universal time.

In another synchronization option, the synchronization of subframe numbers may be performed during installation of an access node. Most access nodes will be provided or will learn a relative subframe or radio frame numbering for the neighboring access nodes. Whenever an access node or one of its cooperating set members undergoes a software reset, the access node may repeat the learning procedure. An access node that undergoes a software reset may therefore inform its neighboring access nodes of this reset condition so that the neighboring access nodes may reacquire subframe number synchronization.

In still another synchronization option, the anchor access node may specify the subframe number in terms of universal time in the X2AP: Scheduling Request. This request may be performed at a point shown in Figure 8, such as at steps 804 or 806.

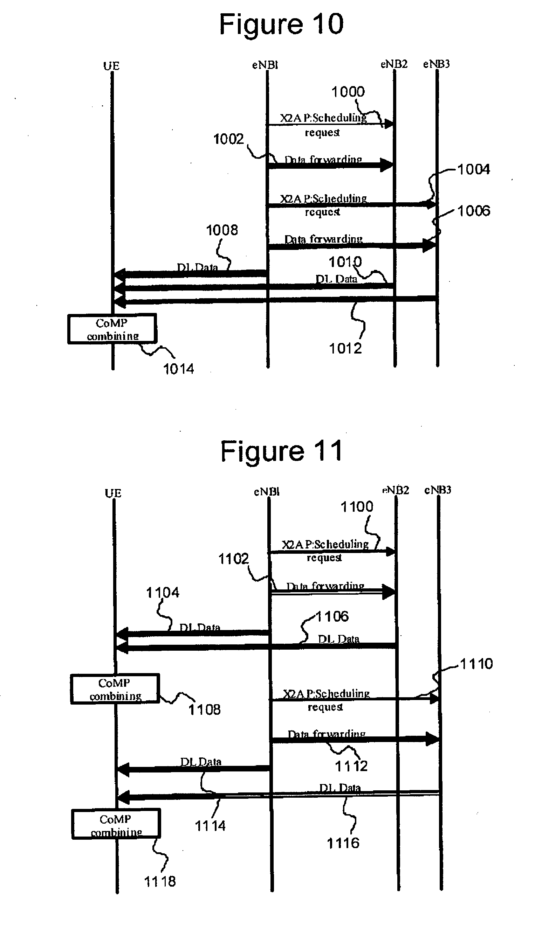

Figure 10 is a flow diagram illustrating backhaul signaling for a CoMP action phase using macro-diversity combining, according to an example of the disclosure. The flow shown in Figure 10 takes place between a UE, and three access nodes, eNB 1, eNB 2, and eNB 3. More or fewer access nodes could be present, and the access nodes could be of different types. The UE may correspond to devices described in prior figures, such as UE 1 106, UE 2 108, and UE 4 110 of Figure 1. In this example, eNB 1 is an anchor eNB, such as eNB 1 102 of Figure 1; and eNB 2 is a cooperating eNB, such as eNB 2 104 of Figure 1. Figure 10 shows a process related to coordination of data transmission during CoMP transmissions, as described with respect to Figure 9, and after the CoMP initiation phase, as described with respect to Figure 7 and Figure 8.

In the process shown in Figure 10, the anchor eNB need not send the scheduling request and the data to all the cooperating eNBs all the time. In macro diversity combining, the anchor eNB schedules the data packet transmission to the UE from all the cooperating access nodes (1000). The serving access node transmits the data synchronously with the cooperating access nodes (1002). These two processes may be repeated, possibly simultaneously, with respect to other cooperating access nodes, such as eNB 3 (1004 and 1006). Thus, the UE may receive a coherent signal from the anchor eNB and all cooperating eNBs (1008, 1010, and 1012). The UE may then perform CoMP combining to achieve a signal gain (1014).

Figure 11 is a flow diagram illustrating backhaul signaling for a CoMP action phase using switched diversity combining, according to an example of the disclosure. Figure 11 is a different example for backhaul signaling, relative to Figure 10. The flow shown in Figure 11 takes place between a UE, and three access nodes, eNB 1, eNB 2, and eNB 3. More or fewer access nodes could be present, and the access nodes could be of different types. The UE may correspond to devices described in prior figures, such as UE 1 106, UE 2 108, and UE 4 110 of Figure 1. In this example, eNB 1 is an anchor eNB, such as eNB 1 102 of Figure 1; and eNB 2 is a cooperating eNB, such as eNB 2 104 of Figure 1. Figure 11 shows a process related to coordination of data transmission during CoMP transmissions, as described with respect to Figure 9, and after the CoMP initiation phase, as described with respect to Figure 7 and Figure 8.

Whereas Figure 10 described macro diversity combining, Figure 11 describes switched diversity combining. In this example, the serving access node (eNB 1) may schedule the transmission of the data packet from one or more of the access nodes, itself included, based on the channel quality feedback from the UE (1100). Data is forwarded from eNB 1 to the cooperating access node eNB 2 (1102). Downlink data is then transmitted from eNB 1 and eNB 2 to the UE (1104 and 1106), and the UE combines this data using CoMP transmissions (1108). This process of scheduling (1110), data forwarding (1112), data downloading (1114 and 1116), and CoMP combining (1118) then repeats.

Thus, the transmitting nodes may be dynamically updated to achieve the best performance gain at the UE. This switched diversity CoMP method may provide an advantage of consuming lower backhaul bandwidth compared to macro diversity combining. Furthermore, in switched diversity combining, the spectral efficiency of the network is maximized by freeing up resources by opportunistically selecting the best access nodes for transmission at a given time.

Anchor Mobility

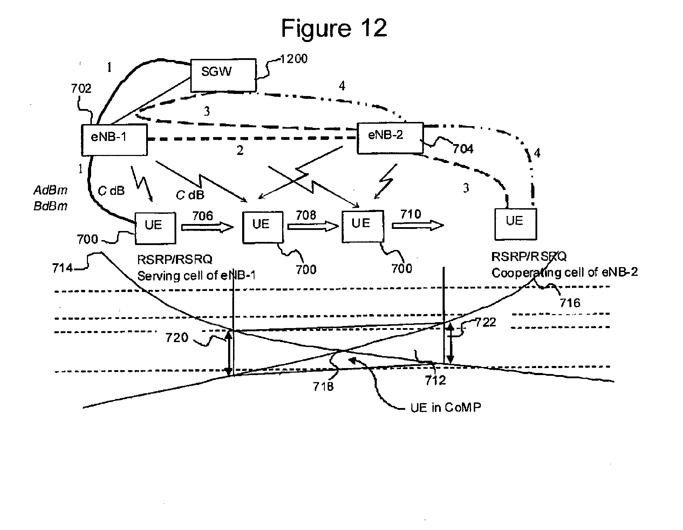

Figure 12 is a block diagram illustrating anchor mobility with CoMP signaling, according to an example of the disclosure. Anchor mobility relates to handover of the duties of an anchor access node from one access node (eNB) to another access node (eNB). The example of Figure 12 refers to devices, techniques, and concepts similar to those presented in Figure 7; thus, reference numerals common to Figures 7 and 12 refer to similar devices, techniques, and concepts.

Anchor mobility may be desirable once a UE is in CoMP mode. Anchor mobility means that anchor functionality may be handed over to a new access node as the UE moves across the network. CoMP transmission may be used efficiently to reduce data loss and radio link failure during anchor mobility. When the PDCCH is only transmitted by the anchor eNB, CoMP transmission may be used to reduce a probability of radio link failure and further reduce or eliminate handover interruption time.

The examples described below contemplate inter-eNB anchor mobility. However, extension of anchor mobility to intra-eNB anchor mobility is straightforward and is also contemplated in the examples. Furthermore, the flows presented below are presented for the case of intra-MME and intra-SGW cases, though other examples will readily suggest themselves in view of this disclosure.

When a UE 700 is moving from an anchor eNB-1 702 to a cooperating eNB-2 704 (as shown by arrows 706, 708, and 710), the signal quality with respect to the anchor access node ($R_a$) degrades gradually, as shown by line 714. Similarly, the signal quality with respect to the cooperating access node ($R_c$) improves, as shown by line 716. In an example, the UE starts measuring the received signal quality with respect to neighboring access nodes when the signal quality with respect to the serving eNB-1 702 reaches below a threshold, A. When the signal quality reaches below threshold B, the UE starts reporting to its serving eNB-1 702 the signal quality with respect to the access nodes neighboring the UE.

The anchor eNB-1 702 may initiate the CoMP data transmission once the difference between the signal quality parameters with respect to the neighboring access node (eNB-2 704) is within C dB of the signal quality parameter with respect to the anchor access node (eNB-1 702). When the $R_c$ reaches above $R_a$ by a predetermined threshold, the neighboring access node (eNB-2 704) may then be made the new anchor eNB.

To accomplish this change, the original serving access node (eNB 702) sends an RRC reconfiguration message to the UE, when CoMP transmission is enabled. Based on the coverage of the PDCCH, the resource assignment or grant is sent either by the anchor access node (eNB-1 702) only or also by one or more of the cooperating access node set (eNB-2 704 and possibly others). Along with the RRC reconfiguration, the original anchor access node (eNB-1 702) also may send the CoMP mode. If the resource grant is also sent by the cooperating access node set, then a descriptor of the CoMP PDCCH region may also be sent.

When the signal quality with respect to the original anchor access node (eNB-1 702) is D dB (where D < C) below the signal quality with respect to one of the members of the CoMP cooperating set, and/or the signal quality with respect to one or more of the neighboring access nodes is greater than an advertised threshold value, then the original anchor access node (eNB-1 702) sends the RRC configuration message with mobility parameters to the UE. The original anchor access node (eNB-1 702) also transfers the access node specific UE context to the other neighboring access node (eNB-2 704).

The UE may then switch to its downlink specific measurements of the new anchor access node (eNB-2 704). The UE may then start using the CoMP PDCCH region indicated in the new RRC reconfiguration message.

As shown in Figure 12, initially the S1-U reference point is between the SGW 1200 and eNB 1 702, as indicated by line 1. When CoMP mode is initiated, the data forwarding path X2-U is established between eNB-1 702 and eNB-2 704, as shown by line 2. The data forwarding may be performed at the MAC PDU level. Once the anchor functionality is switched to eNB-2 704, the data still may be forwarded; however, forwarding then may be performed at the PDCP SDU packet level. This forwarding is shown at line 3. Eventually, the data path may be switched to eNB-2 704, as shown by line 4. When the anchor functionality switch is initiated, the UE may continue to receive data in the CoMP region until the anchor functionality is handed over to the target access node.

In one example, the CoMP data may be scheduled in each subframe, or may be scheduled once for multiple subframes. In another example, the CoMP assignment may also be a persistent or semi-persistent assignment for the duration of the handover time. This example may eliminate the downlink interruption time when the anchor functionality is switched to the target access node (eNB-2 704). The PDCCH for the assignment may be sent in either the CoMP control region, or in the non-CoMP control region, which is described with respect to Figure 3 through Figure 5.

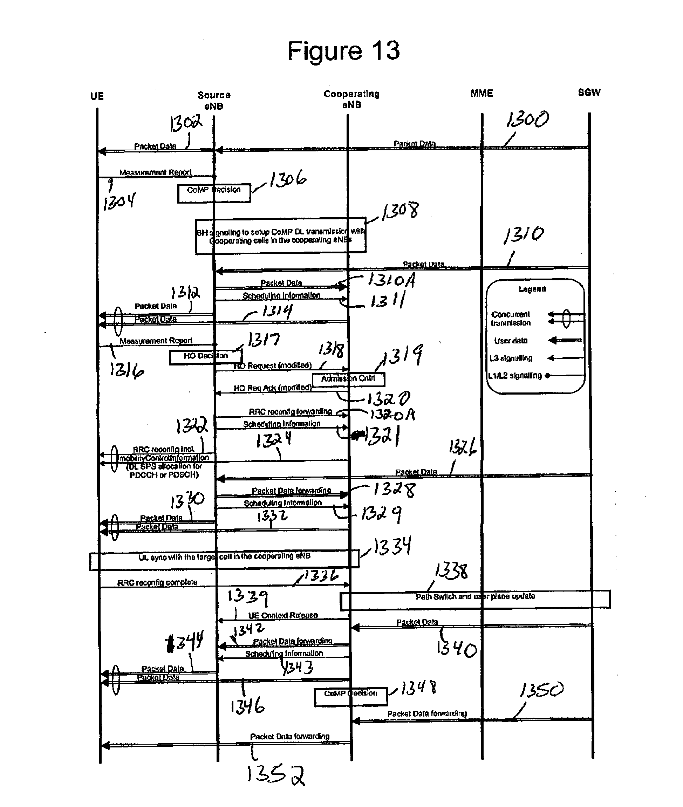

Figure 13 is a flow diagram illustrating signaling data call flow during an exemplary anchor mobility process, according to an example of the disclosure. The process of anchor mobility is also described with respect to Figure 12.

As shown in Figure 13, the RRC reconfiguration message, with mobility parameters, also may include SPS configuration information for the PDCCH or PDSCH. The SPS assignment may be negotiated with the new anchor eNB (eNB-2 704) before sending the SPS assignment to the UE 700.

The flow begins with packet data flowing from the SGW to the source eNB

(1300) and then to the UE (1302). The UE then sends a measurement report to the anchor eNB (1304). Based on this report, the source eNB decides to initiate CoMP transmissions (1306). Backhaul signaling may be used to setup CoMP downlink transmission with cooperating access nodes (1308).

The next time the SGW transmits packet data (1310), the packet data may also sent from the source eNB to the cooperating eNB (1310A), along with possibly scheduling information (1311). Then, both the source eNB and the cooperating eNB(s) transmit that packet data to the UE (1312 and 1314). The UE then combines the data using CoMP receptions.

Thereafter, the UE keeps transmitting either periodic or event based measurement reports to the source eNB (1316). The source eNB then makes a handover decision (1317). Based on this new measurement reports, the source eNB initiates a handover request, possibly modified by parameters described with respect to Figure 12, to the cooperating eNB (1318). The cooperating eNB then makes an admission control decision (1319). In turn, the cooperating eNB transmits a handover acknowledgement, possibly modified by parameters described with respect to Figure 12

(1320). The source eNB may reply with an RRC reconfiguration forwarding (1320A) and possibly also scheduling information (1321). The source eNB then may transmit an RRC reconfiguration message with mobility control information, and possibly the downlink SPS allocation for PDCCH or PDSCH (1322) and the cooperating eNB transmits a PDCCH or PDSCH allocation to the UE (1324).

Again, the SGW transmits packet data to the access nodes, including the source eNB and the cooperating eNB (1326). The source eNB then initiates packet data forwarding to the cooperating eNB (1328), possibly with scheduling information (1329). Packet data is then forwarded from both the source eNB (1330) and the cooperating eNB

(1332), though the process of switching the anchor access node from the source eNB to the cooperating eNB might already be underway.

Next, uplink synchronization with the cooperating eNB is performed (1334). The UE then sends an RRC reconfiguration complete message to the cooperating eNB

(1336). At this time, the path switch and user plane are updated amongst the cooperating eNB, MME, and SGW (1338). The cooperating eNB may then transmit a UE context release message to the source eNB (1339).

The next time packet data is transmitted from the SGW to what is now the new anchor eNB (1340), that packet data is forwarded to the former anchor eNB, now the new cooperating eNB (1342), possibly also with scheduling information (1343). In turn, the packet data is now sent from the new cooperating eNB (1344) and from the new anchor eNB (1346).

Optionally, the cooperating eNB may make a CoMP decision (1348). The next time the serving gateway sends data packet forwarding to the cooperating eNB (1350), the packet data may be forwarded from the cooperating eNB to the UE (1352). The process terminates thereafter.

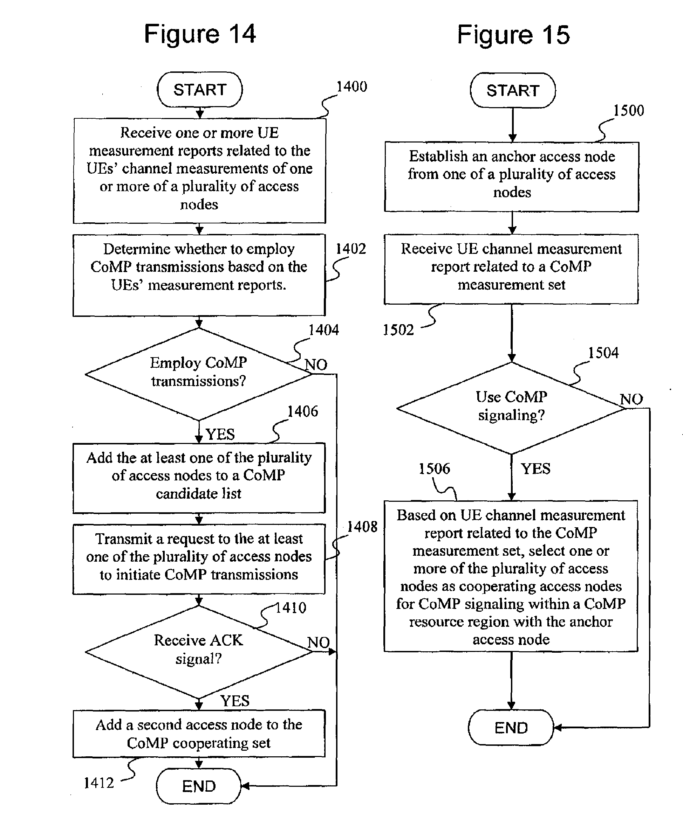

Figure 14 is a flow chart illustrating a process of establishing a CoMP cooperating set, according to an embodiment of the disclosure. The process shown in Figure 14 may be implemented in an access node, such as for example eNB 1 102 in Figure 1.

The process begins with receiving one or more UE measurement reports related to the UEs' channel measurements of one or more of a plurality access nodes (block 1400). A determination is then made whether to employ CoMP transmissions (block 1404). If CoMP transmissions are not employed (a "no" answer to block 1404), then the process terminates.

However, if CoMP transmissions are employed (a "yes" answer to block 1404), then the at least one of the plurality of access nodes are added to a CoMP candidate list (block 1406). Then, a request is transmitted to the at least one of the plurality of access nodes to initiate CoMP transmissions (block 1408).

A determination is then made whether an ACK signal is received from the at least one of the plurality of access nodes that were sent the request (block 1410). If the ACK signal is received (a "yes" answer to block 1410), then a second access node is added to the CoMP cooperating set (block 1412). Thereafter, or in response to a "no" answer to block 1410, the process terminates.

Figure 15 is a flow chart illustrating a process of establishing a CoMP resource region, according to an embodiment of the disclosure. The process shown in Figure 15 may be implemented in an access node, such as for example eNB 1 102 in Figure 1.

The process begins as the anchor access node is established from one of a plurality of access nodes (block 1500). The anchor access node then receives UE channel measurements reports related to CoMP measurement set (block 1502). The anchor access node then makes a determination whether to use CoMP signaling (block 1504). If CoMP signaling is to be used (a "yes" answer to block 1506), then based on UE channel measurement reports related to the CoMP measurement set, the anchor access node selects one or more of the plurality of access nodes as cooperating access nodes for CoMP signaling within a CoMP resource region with the anchor access node (block 1506). Thereafter, or in response to a "no" answer at block 1504, the process terminates.

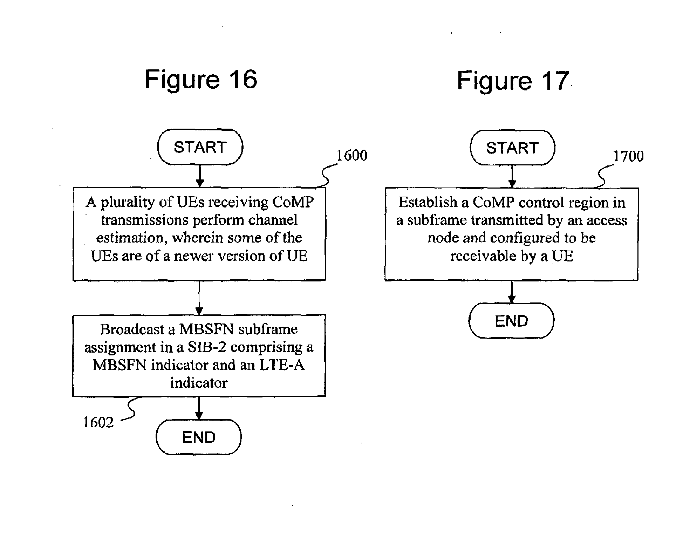

Figure 16 is a flow chart illustrating a process of performing backhaul signaling during CoMP transmissions, according to an example of the disclosure. The process shown in Figure 16 may be implemented in an access node, such as for example eNB 1 102 in Figure 1.

The process begins as a plurality of UEs receiving CoMP transmissions perform channel estimation, wherein some of the UEs are of a newer version than others of the UEs (block 1600). The anchor access node then broadcasts a MBSFN subframe assignment in a SIB-2 comprising a MBSFN indicator and an LTE-A indicator (block 1602). The process terminates thereafter.

Figure 17 is a flow chart illustrating a process of establishing a CoMP control region, according to an example of the disclosure. The process shown in Figure 17 may be implemented in an access node, such as for example eNB 1 102 in Figure 1. The anchor access node establishes a CoMP control region in a subframe transmitted by an access node and configured to be receivable by a UE (block 1700). The process terminates thereafter.

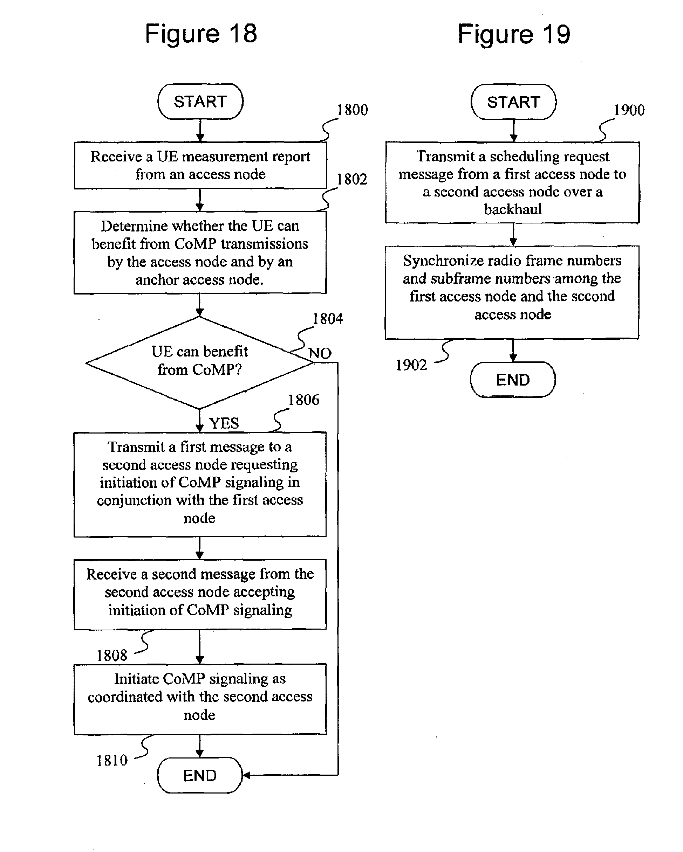

Figure 18 is a flow chart illustrating a process of initiating CoMP signaling, according to an example of the disclosure. The process shown in Figure 18 may be implemented in an access node, such as for example eNB 1 102 in Figure 1.

The process begins as the anchor access node receives a UE measurement report from an access node (block 1800). The anchor access node determines whether the UE can benefit from CoMP transmissions by the cooperating access node and by the anchor access node (block 1802). A determination is then made whether the UE can benefit from CoMP (block 1804). If not (a "no" answer to block 1804), then the process terminates.

However, if the UE can benefit from CoMP (a "yes" answer to block 1804), then the anchor access node transmits a first message to a second access node requesting initiation of CoMP signaling in conjunction with the first access node (block 1806). The anchor access node then receives a second message from the second access node accepting initiation of CoMP signaling (block 1808). The anchor access node then initiates CoMP signaling as coordinated with the second access node (block 1810). The process terminates thereafter.

Figure 19 is a flow chart illustrating a process of transmitting a scheduling request over a backhaul, according to an example of the disclosure. The process shown in Figure 19 may be implemented in an access node, such as for example eNB 1 102 in Figure 1.

The process begins as a scheduling request message is transmitted from a first access node to a second access node over a backhaul (block 1900). Optionally, radio frame numbers and subframe numbers are synchronized among the first access node and the second access node (block 1902). The process terminates thereafter.

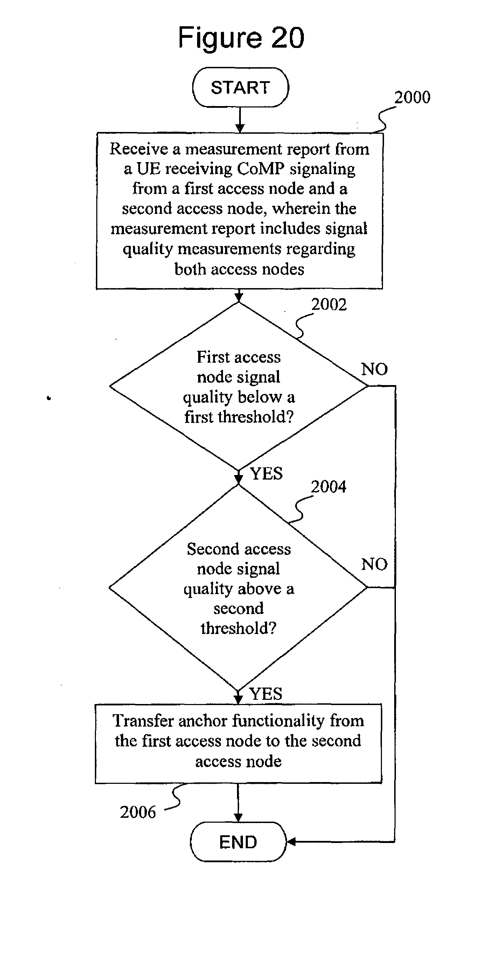

Figure 20 is a flow chart illustrating a process of transferring anchor functionality from a first access node to a second access node, according to an example of the disclosure. The process shown in Figure 20 may be implemented in an access node, such as for example eNB 1 102 in Figure 1.

The process begins as a measurement report is received from a UE receiving CoMP signaling from a first access node and a second access node, wherein the measurement report includes signal quality measurements regarding both access nodes (block 2000). A determination is then made whether the first access node signal quality, at the UE, is below a first threshold (block 2002). If not, (a "no" answer to block 2002), then the process terminates.

If the first access node signal quality at the UE is below the first threshold, (a "yes" answer to block 2002), then a second determination is made whether the second access node signal quality is above a second threshold (block 2004). If not, (a "no" answer to block 2004), then the process terminates.

If the second access node signal quality at the UE is above the second threshold (a "yes" answer to block 2004), then anchor functionality is transferred from the first access node to the second access node (block 2006). Thus, in order to transfer anchor functionality in this example, both the first access node signal quality must be below the first threshold and the second access node signal quality must be above a second threshold. However, in other examples different factors, more factors, or less factors could be used to determine whether to transfer anchor functionality. With respect to the example of Figure 20, the process terminates.

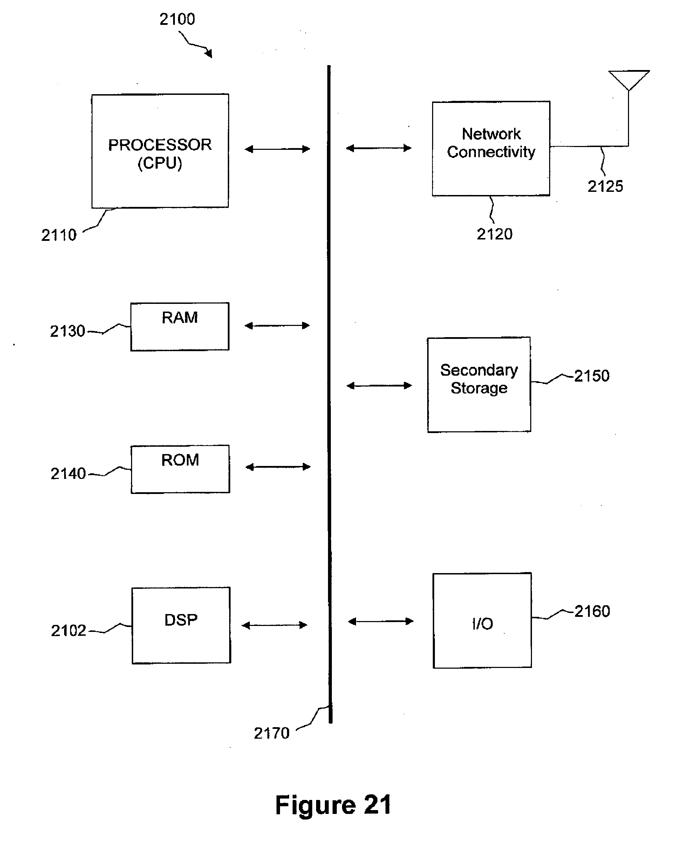

The UEs, as well as other components described above, might include a processing component that is capable of executing instructions related to the actions described above. Figure 21 illustrates an example of a system 2100 that includes a processing component 2110 suitable for implementing one or more examples disclosed herein. In addition to the processor 2110 (which may be referred to as a central processor unit or CPU), the system 2100 might include network connectivity devices 2120, random access memory (RAM) 2130, read only memory (ROM) 340, secondary storage 2150, and input/output (I/O) devices 2170. These components might communicate with one another via a bus 2170. In some cases, some of these components may not be present or may be combined in various combinations with one another or with other components not shown. These components might be located in a single physical entity or in more than one physical entity. Any actions described herein as being taken by the processor 2110 might be taken by the processor 2110 alone or by the processor 2110 in conjunction with one or more components shown or not shown in the drawing, such as a digital signal processor (DSP) 2102. Although the DSP 2102 is shown as a separate component, the DSP 2102 might be incorporated into the processor 2110.

The processor 2110 executes instructions, codes, computer programs, or scripts that it might access from the network connectivity devices 2120, RAM 2130, ROM 2140, or secondary storage 2150 (which might include various disk-based systems such as hard disk, floppy disk, SIM (subscriber identity module) card, or optical disk, or other storage device). An application or other computer usable program code may be stored on any of these devices, or on some other storage device. While only one CPU 2110 is shown, multiple processors may be present. Thus, while instructions may be discussed as being executed by a processor, the instructions may be executed simultaneously, serially, or otherwise by one or multiple processors. The processor 2110 may be implemented as one or more CPU chips.

The network connectivity devices 2120 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-known devices for connecting to networks. These network connectivity devices 2120 may enable the processor 2110 to communicate with the Internet or one or more telecommunications networks or other networks from which the processor 2110 might receive information or to which the processor 2110 might output information. The network connectivity devices 2120 might also include one or more transceiver components 2125 capable of transmitting and/or receiving data wirelessly.

The RAM 2130 might be used to store volatile data and perhaps to store instructions that are executed by the processor 2110. The ROM 2140 is a non-volatile memory device that typically has a smaller memory capacity than the memory capacity of the secondary storage 2150. ROM 2140 might be used to store instructions and perhaps data that are read during execution of the instructions. Access to both RAM 2130 and ROM 2140 is typically faster than to secondary storage 2150. The secondary storage 2150 is typically comprised of one or more disk drives or tape drives and might be used for non-volatile storage of data or as an over-flow data storage device if RAM 2130 is not large enough to hold all working data. Secondary storage 2150 or may be used to store programs that are loaded into RAM 2130 when such programs are selected for execution.

The I/O devices 2160 may include liquid crystal displays (LCDs), touch screen displays, keyboards, keypads, switches, dials, mice, track balls, voice recognizers, card readers, paper tape readers, printers, video monitors, or other well-known input devices. Also, the transceiver 2125 might be considered to be a component of the I/O devices 2160 instead of or in addition to being a component of the network connectivity devices 2120.

Thus, the examples provide for a method of and devices for initiating coordinated multipoint (CoMP) signaling. A first access node receives a measurement report from a user equipment (UE). The first access node determines, based on the measurement report, whether to initiate CoMP signaling. Responsive to a determination to initiate CoMP signaling, the first access node transmits a first message to a second access node requesting initiation of CoMP signaling in conjunction with the first access node. The first access node then receives a second message from the second access node accepting initiation of CoMP signaling. Finally, the first access node initiates CoMP signaling as coordinated with the second access node.

The examples further provide for devices and a method during channel estimation by a plurality of user equipments (UEs) receiving a coordinated multipoint (CoMP) transmission. A first set of the plurality of UEs are of a first version and a second set of the plurality of UEs are of a second version that is newer than the first version. An anchor access node broadcasts a multicast broadcast single frequency network (MBSFN) subframe assignment in a system information block type 2 (SIB-2). The SIB-2 comprises a MBSFN indicator and a long term evolution advanced (LTE-A) indicator.

The examples yet further provide for a computer implemented method and devices for initiating coordinated multipoint (CoMP) signaling. A first access node receives a measurement report from a user equipment (UE). The first access node determines, based on the measurement report, whether to initiate CoMP signaling. Responsive to a determination to initiate CoMP signaling, the first access node transmits a first message to a second access node requesting initiation of CoMP signaling in conjunction with the first access node. The first access node receives a second message from the second access node accepting initiation of CoMP signaling. The first access node then initiates CoMP signaling as coordinated with the second access node.

The examples still further provide for devices and a method of transferring coordinated multipoint (CoMP) anchor functionality from a first access node to a second access node. The first access node initially comprises an anchor access node and wherein the second access node initially comprises a cooperating access node. A first access node receives a measurement report from a user equipment (UE) receiving the CoMP signaling. The measurement report includes a first signal quality measurement of the first access node and a second signal quality measurement of the second access node. The first access node then, responsive to the measurement report indicating that the first signal quality measurement is below a first threshold and that the second signal quality measurement is above a second threshold, transfers anchor functionality from the first access node to the second access node.

The examples also provide for establishing a coordinated multi-point (CoMP) cooperating set among a plurality of access nodes including an anchor access node, the method comprising: receiving one or more user equipment (UE) measurement reports related to the UEs' channel measurements of one or more of the plurality of access nodes; determining whether to employ CoMP transmissions based on the UEs' measurement reports; adding the at least one of the plurality of access nodes to a CoMP candidate list; transmitting a request to the at least one of the plurality of access nodes to initiate CoMP transmissions; and adding the second access node to the CoMP cooperating set.

The examples also provide for a method of establishing a coordinated multi-point (CoMP) resource region, the method comprising: establishing an anchor access node from one of a plurality of access nodes; receiving user equipment (UE) measurement reports related to a CoMP measurement set comprising one or more of the plurality of access nodes; determining whether to use CoMP signaling; and selecting one or more of the plurality of access nodes as cooperating access nodes for CoMP signaling within a CoMP resource region.

The examples also provide for a method, comprising: broadcasting a multicast broadcast single frequency network (MBSFN) subframe assignment in a system information block type 2 (SIB-2), wherein the SIB-2 comprises a MBSFN indicator and a long term evolution advanced (LTE-A) indicator.

The examples also provide for a method comprising: establishing a coordinated multipoint (CoMP) control region in a subframe transmitted by an access node and configured to be receivable by a user equipment (UE).

The examples also provide for a method of initiating coordinated multipoint (CoMP) signaling, comprising: receiving, at a first access node, a measurement report from a user equipment (UE); determining, based on the measurement report, whether to initiate CoMP signaling; transmitting a first message to a second access node requesting initiation of CoMP signaling in conjunction with the first access node; receiving, at the first access node, a second message from the second access node accepting initiation of CoMP signaling; and initiating CoMP signaling as coordinated with the second access node.

The examples also provide for a method of coordinating data transmission during coordinated multipoint (CoMP) signaling among a first access node and a second access node, the method comprising: transmitting a scheduling request message from the first access node to the second access node over a backhaul.

The examples also provide for a method of transferring coordinated multipoint (CoMP) anchor functionality from a first access node to a second access node, the first access node initially comprising an anchor access node and the second access node initially comprising a cooperating access node, comprises: receiving a measurement report from a user equipment (UE) receiving the CoMP signaling, wherein the measurement report includes a first signal quality measurement of the first access node and a second signal quality measurement of the second access node; responsive to the measurement report, transferring anchor functionality from the first access node to the second access node.

The examples also provide for a first access node comprising a processor configured to transfer coordinated multipoint (CoMP) anchor functionality from the first access node to a second access node, wherein the first access node initially comprises an anchor access node and wherein the second access node initially comprises a cooperating access node, wherein the processor is further configured to receive a measurement report from a user equipment (UE) receiving the CoMP signaling, wherein the measurement report includes a first signal quality measurement of the first access node and a second signal quality measurement of the second access node, and wherein the processor is further configured to, responsive to the measurement report, transfer anchor functionality from the first access node to the second access node.

The examples may use the terms "connected," "coupled," or "in communication with." These terms refer both to direct connection, as in physically attached, or indirectly connected, as in a processor connected to a memory via a bus. These terms may also refer to wireless communications.

The examples contemplate one or more computer readable media. The term "computer readable medium" refers to a tangible storage device which can store data and from which a processor or other electronic device may read data. However, the examples may also be embodied on transmission media, such as carrier waves.

While several examples have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various examples as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

**Claims**

1. A method of establishing a coordinated multi-point, CoMP, resource region, the method comprising:

   establishing an anchor access node from one of a plurality of access nodes;
   receiving user equipment, UE, measurement reports related to a CoMP measurement set comprising one or more of the plurality of access nodes;
   determining whether to use CoMP signaling; and
   selecting one or more of the plurality of access nodes as cooperating access nodes for CoMP signaling within a CoMP resource region.

2. The method of claim 1 wherein the anchor access node has a highest priority to assign resources to the UE relative to all of the cooperating access nodes.

3. The method of claim 2 wherein at least one of the cooperating access nodes comprises an anchor access node for a second UE.

4. The method of claim 3 wherein the CoMP signaling establishes CoMP joint processing, and wherein the method further comprises:

   transmitting, by the anchor access node and to the cooperating access nodes, scheduling information; and
   transmitting to the UE, by the anchor access node and by the cooperating access nodes, data using a CoMP transmission scheme on assigned frequency-time resources.

5. The method of claim 4 wherein the scheduling information comprises at least one of a resource, a transmission mode, and a modulation and coding scheme.

6. The method of claim 2 wherein the CoMP signaling is used for interference avoidance, and wherein the method further comprises:

   informing the cooperating access nodes of an interfering pre-coding matrix indicator and of what resources to avoid using.

7. The method of claim 2 wherein the CoMP signaling includes at least one parameter selected from the group consisting of system frame number, subframe number, resource block pattern within a subframe, and periodicity.

**8.** The method of claim 2 further comprising:

adjusting a size of the CoMP resource region based on a total number of UEs receiving the CoMP signaling.

**Patentansprüche**

**1.** Ein Verfahren zum Herstellen eines "koordinierter Multipunkt (CoMP - coordinated multi-point)"-Ressourcenbereichs, wobei das Verfahren aufweist:

Herstellen eines Anker-Zugangsknotens aus einem einer Vielzahl von Zugangsknoten;
Empfangen von Benutzereinrichtungs(UE - user equipment)-Messberichten in Bezug auf einen CoMP-Messsatz mit einem oder mehreren der Vielzahl von Zugangsknoten;
Bestimmen, ob eine CoMP-Signalisierung zu verwenden ist; und
Auswählen eines oder mehrerer der Vielzahl von Zugangsknoten als kooperierende Zugangsknoten für eine CoMP-Signalisierung in einem CoMP-Ressourcenbereich.

**2.** Das Verfahren gemäß Anspruch 1, wobei der Anker-Zugangsknoten eine höchste Priorität zum Zuweisen von Ressourcen zu der UE relativ zu allen kooperierenden Zugangsknoten hat.

**3.** Das Verfahren gemäß Anspruch 2, wobei zumindest einer der kooperierenden Zugangsknoten einen Anker-Zugangsknoten für eine zweite UE aufweist.

**4.** Das Verfahren gemäß Anspruch 3, wobei die CoMP-Signalisierung eine CoMP-Joint-Verarbeitung herstellt und wobei das Verfahren weiter aufweist:

Übertragen, durch den Anker-Zugangsknoten und an die kooperierenden Zugangsknoten, von Planungsinformation; und
Übertragen an die UE, durch den Anker-Zugangsknoten und durch die kooperierenden Zugangsknoten, von Daten unter Verwendung eines CoMP-Übertragungsschemas auf zugewiesenen Frequenzzeitressourcen.

**5.** Das Verfahren gemäß Anspruch 4, wobei die Planungsinformation zumindest eines aus einer Ressource, einem Übertragungsmodus und einem Modulations- und Codierschema aufweist.

**6.** Das Verfahren gemäß Anspruch 2, wobei die CoMP-Signalisierung zur Vermeidung von Interferenz verwendet wird, und wobei das Verfahren weiter aufweist:

Informieren der kooperierenden Zugangsknoten über einen störenden Vorcodiermatrixindikator und darüber, die Verwendung welcher Ressourcen zu vermeiden ist.

**7.** Das Verfahren gemäß Anspruch 2, wobei die CoMP-Signalisierung zumindest einen Parameter umfasst, der aus der Gruppe ausgewählt ist, die aus Systemrahmennummer, Teilrahmennummer, Ressourceblockmuster in einem Teilrahmen und Periodizität besteht.

**8.** Das Verfahren gemäß Anspruch 2, das weiter aufweist:

Anpassen einer Größe des CoMP-Ressource-Bereichs basierend auf einer Gesamtanzahl von UEs, die die CoMP-Signalisierung empfangen.

**Revendications**

**1.** Procédé d'établissement d'une région de ressources multipoint coordonnées, CoMP pour « *Coordinated Multi-Point* », le procédé comprenant les étapes consistant à :

établir un noeud d'accès d'ancrage à partir d'un ou plusieurs noeuds d'accès ;
recevoir des rapports de mesure d'équipements d'utilisateurs portant sur un ensemble de mesures CoMP comprenant un ou plusieurs noeuds sur la pluralité de noeuds d'accès ;

déterminer si la signalisation CoMP doit ou non être utilisée ; et

sélectionner un ou plusieurs noeuds sur la pluralité de noeuds d'accès comme noeuds d'accès coopérants pour la signalisation CoMP dans une région de ressources CoMP.

2. Procédé selon la revendication 1, dans lequel le noeud d'accès d'ancrage a une priorité maximale dans d'attribution de ressources à l'équipement d'utilisateur, par rapport à tous les noeuds d'accès coopérants.

3. Procédé selon la revendication 2, dans lequel au moins un des noeuds d'accès coopérants constitue un noeud d'accès d'ancrage pour un second équipement d'utilisateur.

4. Procédé selon la revendication 3, dans lequel la signalisation CoMP établit un traitement CoMP conjoint, et le procédé comprenant en outre les étapes consistant à :

transmettre des informations d'ordonnancement entre le noeud d'accès d'ancrage et les noeuds d'accès coopérants ; et

transmettre des données à l'équipement d'utilisateur, par le noeud d'accès d'ancrage et les noeuds d'accès coopérants, en utilisant un mécanise de transmission CoMP sur des ressources fréquentielles et temporelles attribuées.

5. Procédé selon la revendication 4, dans lequel les informations d'ordonnancement comprennent au moins un élément parmi une ressource, un mode de transmission et un mécanisme de modulation et de codage.

6. Procédé selon la revendication 2, dans lequel la signalisation CoMP est utilisée pour éviter les interférences, et le procédé comprenant en outre l'étape consistant à :

informer les noeuds d'accès coopérants d'un indicateur de matrice de pré-codage qui interfère et de ressources à éviter d'utiliser.

7. Procédé selon la revendication 2, dans lequel la signalisation CoMP comprend au moins un paramètre sélectionné dans le groupe constitué de : numéro de trame du système, numéro de sous-trame, motif de blocs de ressources dans une sous-trame et périodicité.

8. Procédé selon la revendication 1, comprenant en outre l'étape consistant à :

ajuster une taille de la région de ressources CoMP en fonction d'un nombre total d'équipements d'utilisateurs qui reçoivent la signalisation CoMP.

# Figure 1

# Figure 2

| | | 214 | 216 | | | | | | | | | | |
|---|---|---|---|---|---|---|---|---|---|---|---|---|---|
| 200 | Cell-0 | 4 | /// | 1 | | 2 | | 6 | | 5 | | 3 | |
| 202 | Cell-1 | 4 | 0 | /// | | 2 | | 6 | | 5 | | 3 | |
| 204 | Cell-2 | 4 | 0 | 1 | | /// | | 6 | | 5 | | 3 | |
| 206 | Cell-3 | 4 | 0 | 1 | | 2 | | 6 | | 5 | | /// | |
| 208 | Cell-4 | /// | 0 | 1 | | 2 | | 6 | | 5 | | 3 | |
| 210 | Cell-5 | 4 | 0 | 1 | | 2 | | 6 | | /// | | 3 | |
| 212 | Cell-6 | 4 | 0 | 1 | | 2 | | /// | | 5 | | 3 | |

218  220

*M* RBs

◄─── Sub-Frame ───►

# Figure 3

302  304  306  308  300

| NC | NC | CoMP-PDCCH | NoN-COMP PDSCH | 310 |
|---|---|---|---|---|
| NC | NC | CoMP-PDCCH | | |
| NC | NC | CoMP-PDCCH | | |
| NC | NC | CoMP-PDCCH | CoMP PDSCH | |
| NC | NC | CoMP-PDCCH | | |
| NC | NC | CoMP-PDCCH | | |
| NC | NC | CoMP-PDCCH | | 312 |
| NC | NC | CoMP-PDCCH | NoN-COMP PDSCH | 314 |
| NC | NC | CoMP-PDCCH | | |
| NC | NC | CoMP-PDCCH | | |

Resource Blocks for CoMP

## Figure 4

| 408 | 402 | 404 | 406 | | |
|---|---|---|---|---|---|
| POINTER | NC | | | NoN-COMP PDSCH | 412 |
| NC | NC | | | | |
| NC | NC | | | CoMP PDCCH | 410 |
| NC | NC | | | | |
| NC | NC | | | | |
| NC | NC | | | | |
| NC | NC | | | | |
| ⋮ | ⋮ | | | | |
| NC | NC | | | COMP PDSCH | |
| NC | NC | | | | |
| NC | NC | | | | |

400

Resource Blocks for CoMP Control

## Figure 5

500

| 502 | 512 | 504 | 506 | 508 | 510 |
|---|---|---|---|---|---|
| POINTER | NC | CoMP PDCCH | CoMP PDCCH | COMP PDSCH | |
| NC | NC | | | | |
| NC | NC | | | | |
| NC | NC | CoMP PDCCH | CoMP PDCCH | CoMP PDSCH | |
| NC | NC | | | | |
| NC | NC | | | | |
| NC | NC | | | | 514 |
| ⋮ | ⋮ | | | | |
| NC | NC | | | NoN-COMP PDSCH | |
| NC | NC | | | | |
| NC | NC | | | | |

Resource Blocks used for CoMP Control and Data

28

Figure 6

600

608

604

602

610

PDCCH

| R/R/E/LCID/F/L Subheader | R/R/E/LCID/F/L Subheader | R/R/E/LCID/F/L Subheader | R/R/E/LCID/F/L Subheader |
|---|---|---|---|
| MAC Header | Data-UE0 | Data-UE1 | Data-UE 2 |

Downlink Transmission Block for CoMP Control

Downlink Transmission Block for CoMP Data

610

606

L

616

614

TTI (1ms)

614

| R/R/E/LCID/F/L Subheader | R/R/E/LCID/F/L Subheader | R/R/E/LCID/F/L Subheader | R/R/E/LCID/F/L Padding Subheader |
|---|---|---|---|
| MAC Header | PDCCH (C-RNTI-UE0) | PDCCH (C-RNTI-UE1) | PDCCH (C-RNTI-UE2) |

L

612

# Figure 7

# Figure 8

# Figure 9

EP 2 465 317 B1

# Figure 10

# Figure 11

32

# Figure 12

# Figure 13

# Figure 14

START — 1400

Receive one or more UE measurement reports related to the UEs' channel measurements of one or more of a plurality of access nodes

Determine whether to employ CoMP transmissions based on the UEs' measurement reports. — 1402

Employ CoMP transmissions? — 1404

NO

YES — 1406

Add the at least one of the plurality of access nodes to a CoMP candidate list

Transmit a request to the at least one of the plurality of access nodes to initiate CoMP transmissions — 1408

Receive ACK signal? — 1410

NO

YES

Add a second access node to the CoMP cooperating set

1412 — END

# Figure 15

START

Establish an anchor access node from one of a plurality of access nodes — 1500

Receive UE channel measurement report related to a CoMP measurement set

1502

Use CoMP signaling? — 1504

NO

1506    YES

Based on UE channel measurement report related to the CoMP measurement set, select one or more of the plurality of access nodes as cooperating access nodes for CoMP signaling within a CoMP resource region with the anchor access node

END

# Figure 16

START

1600

A plurality of UEs receiving CoMP
transmissions perform channel
estimation, wherein some of the
UEs are of a newer version of UE

Broadcast a MBSFN subframe
assignment in a SIB-2 comprising a
MBSFN indicator and an LTE-A
indicator

1602

END

# Figure 17

START

1700

Establish a CoMP control region in
a subframe transmitted by an access
node and configured to be
receivable by a UE

END

## Figure 18

START

1800

Receive a UE measurement report from an access node

1802

Determine whether the UE can benefit from CoMP transmissions by the access node and by an anchor access node.

1804

UE can benefit from CoMP?  NO

1806

YES

Transmit a first message to a second access node requesting initiation of CoMP signaling in conjunction with the first access node

Receive a second message from the second access node accepting initiation of CoMP signaling

1808

Initiate CoMP signaling as coordinated with the second access node

1810

END

## Figure 19

START

1900

Transmit a scheduling request message from a first access node to a second access node over a backhaul

Synchronize radio frame numbers and subframe numbers among the first access node and the second access node

1902

END

# Figure 20

START

2000

Receive a measurement report from a UE receiving CoMP signaling from a first access node and a second access node, wherein the measurement report includes signal quality measurements regarding both access nodes

2002

First access node signal quality below a first threshold? — NO

YES

2004

Second access node signal quality above a second threshold? — NO

YES

Transfer anchor functionality from the first access node to the second access node

2006

END

**Figure 21**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Design Considerations for COMP Joint Transmission. *Submission no. R1-091232 to 3GPP TSG RAN WG1 Meeting #56bis,* 23 March 2009